Europäisches Patentamt

European Patent Office

Office européen des brevets

(19)

(11) **EP 1 146 379 A1**

(12) **EUROPEAN PATENT APPLICATION**
published in accordance with Art. 158(3) EPC

(43) Date of publication:
**17.10.2001 Bulletin 2001/42**

(51) Int Cl.7: **G02B 27/28**

(21) Application number: **99973130.0**

(86) International application number:
**PCT/JP99/06659**

(22) Date of filing: **29.11.1999**

(87) International publication number:
**WO 00/33122 (08.06.2000 Gazette 2000/23)**

(84) Designated Contracting States:
**DE FR GB**

(30) Priority: **27.11.1998 JP 33716598**
**04.02.1999 JP 2757399**
**16.04.1999 JP 10934299**
**08.09.1999 JP 25439099**

(71) Applicant: **MATSUSHITA ELECTRIC INDUSTRIAL CO., LTD.**
**Kadoma-shi, Osaka 571-8501 (JP)**

(72) Inventors:
• **OGIWARA, Akifumi**
**Hirakata-shi, Osaka 573-1105 (JP)**

• **KURATOMI, Yasunori**
**Sanda-shi, Hyogo 669-1324 (JP)**
• **TANAKA, Yukio**
**Yamashina-ku, Kyoto-shi, Kyoto 607-8405 (JP)**
• **TAKIMOTO, Akio**
**Neyagawa-shi, Osaka 572-0016 (JP)**
• **YAMAGISHI, Shigekazu**
**Takatsuki-shi, Osaka 569-1041 (JP)**

(74) Representative:
**Dempster, Benjamin John Naftel et al**
**Withers & Rogers,**
**Goldings House,**
**2 Hays Lane**
**London SE1 2HW (GB)**

(54) **POLARIZED LIGHT ILLUMINATOR, IMAGE DISPLAY, PORTABLE INFORMATION TERMINAL, HEAD-UP DISPLAY, METHOD FOR PRODUCING DIFFRACTION OPTICAL DEVICE, METHOD FOR PRODUCING POLARIZED LIGHT ILLUMINATOR, AND METHOD FOR PRODUCING IMAGE DISPLAY**

(57)  An optical medium of liquid crystal mixed with a polymer precursor is arranged between a pair of glass substrates 1202, and heated to for example about 50 C to 70 C and exposed for about 5min by interference fringes using laser light of about 515nm wavelength from, for example, an Ar laser. When the exposure begins (first stage), the polymer precursor begins to cure, and, as shown in Fig. 10(a), polymer columns 1203 are formed in a periodic arrangement. When the exposure is continued (second stage) liquid crystal polymers that have accumulated in the dark portions align themselves macroscopically in a direction that is perpendicular with respect to the walls of the cured polymer columns 1203, as shown in Fig. 10(b). The obtained diffractive optical element has high polarization selectivity and diffraction efficiency, and using such a diffractive optical element, it is possible to devise polarized illumination systems and image display systems that can display bright images with high contrast.

FIG. 10

(a) Grating Formation

(b) Liquid Crystal Alignment (65°C)

(c) Liquid Crystal Alignment (23°C)

EP 1 146 379 A1

**Description**

TECHNICAL FIELD

The present invention relates to polarized illumination systems emitting light-source light with aligned polarization and image display systems using such polarized illumination systems. These image display systems can be used among others for portable information terminal devices, head-up displays for on-board use or personal use, projection-type display systems, image display monitors, traffic signs, and information displays.

The present invention relates also to methods for manufacturing such polarized illumination systems and image display systems, to diffractive optical elements used in these devices or in optical information processing devices for optical recording and reading of information, as well as to methods for manufacturing such diffractive optical elements.

BACKGROUND ART

Image display systems using liquid crystal display elements are thin and light, and in recent years, due to higher capacities as well as higher definitions attained by the introduction of TFT elements, they are widely used in monitors of notebook-type personal computers and portable information terminals. Furthermore, due to improvements in resolution and brilliance, a large market is also expected for projection-type display systems using a small liquid crystal display element of only about one inch size as a light valve and projecting the attained picture through a magnified projection system onto a large screen. In particular in systems with reflection-type light valves, the effective pixel area can be increased by forming a pattern of TFT elements on the rear side of a reflective electrode, thus increasing the light efficiency even while making the pixel size smaller at higher resolutions, so that these elements have drawn attention as elements that are suited to increase the resolution even further.

Such liquid crystal display elements display images by polarization modulation, changing the polarization of incident light by controlling the voltage that is applied to each pixel. That is to say, with a liquid crystal layer made of a twisted nematic liquid crystal, for example, pixels to which an electric field is applied emit incident light beams without changing their polarization, whereas pixels to which no electric field is applied emit incident light beams twisting their polarization by about 90°. If, for example, light of a predetermined polarization from a polarizer or a polarizing beam splitter is incident on the pixels, and after being transmitted through the liquid crystal layer is again incident on a polarizer, then the light of the pixels to which an electric field was applied simply passes through the polarizer, whereas the light of the pixels to which no electric field was applied is absorbed by the polarizer, because its polarization has been rotated by 90°. Therefore, each pixel can be controlled to be dark or bright, and an image can be displayed.

However, when a polarizer or a polarizing beam splitter is used to produce light with a predetermined polarization, then the light of other polarization directions is not utilized for the display, so that it is not possible to make the light efficiency higher than 50%, and it is difficult to display a bright image. It is particularly difficult to achieve a bright projection image with a projection-type display system that can be perceived without darkening the room interior.

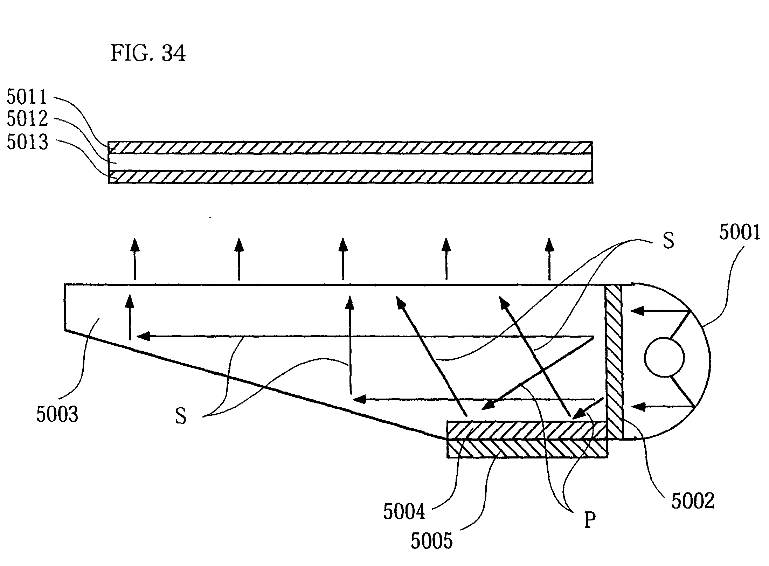

For the case of a projection-type display system, for example, it has been suggested to take a polarization conversion element for converting those light beams from a light source that have a certain polarization direction into light beams of the other polarization direction, and use it for a polarized illumination device that irradiates light-source light onto a liquid crystal display element. More specifically, for example JP H07-294906A discloses a polarization conversion element, in which a lens plate is combined with prisms that have the function of polarizing beam splitters provided with a dielectric multilayer film (polarization separation film). Fig. 34 shows an outline of this configuration. According to this configuration, light-waves entering a lens plate 9901 provided with an array of lenses are constricted and incident on a row of alternating prisms 9902. These prisms 9902 are provided with a dielectric multilayer film, and while P-waves 9905 simply pass through them, S-waves 9904 are reflected by the prisms and enter the adjacent prisms, where they are reflected again, and emitted as P-waves after rotating their polarization by 90° with phase-retardation plates 9903 (such as $\lambda/2$-plates). That is to say, it is possible to attain a light beam whose width is substantially the same as that of the incident light beam, and whose polarization is aligned. Here, when there are many of such polarization conversion elements, they are used in combination with an integrator for increasing the uniformity of the light-source light. JP H03-11180A and JP H05-346557A for example disclose an integrator using two lens plates. In principle, such an integrator is the same as used in an exposure device, in which collimated light beams are partitioned by a plurality of rectangular lenses, forming an overlapping image of the rectangular lens images on the liquid crystal light valve with relay lenses in 1-to-1 correspondence with the rectangular lenses.

However, with such a polarization conversion element, the prisms are cubes filled with a liquid or a solid in order to match the refractive index with the dielectric multilayer film, for example, and the dielectric multilayer films are arranged at angles of 45° in order to bend the propagation direction by 90°. Therefore, the dimension in the thickness direction is determined by the thickness of the dielectric multilayer films constituting the prisms, and it is difficult to configure thin, small elements. Moreover, in order to increase the polarization separation, it is necessary to layer several dielectric multilayer films on top of one another, which leads to an increase in manufacturing costs.

When such an integrator and a polarization conversion element are combined, and the alignment of the lenses of the integrator and the prisms of the polarization conversion element is not exact, the polarization conversion efficiency drops, so that it is necessary to align their positions precisely, which, again, leads to an increase in manufacturing costs. If the lenses constituting the integrator are made small and their number is increased in order to further improve the uniformity of the irradiation light, or if the size of the lenses is changed for various regions in order to improve the light efficiency as disclosed in JP H05-346557A, then it is also necessary to make the prisms of the polarization conversion element accordingly smaller, or to change their size for the various regions, but it is very difficult to form a large number of prisms in mm-order with high uniformity, and to align their position is even more difficult.

The following is an explanation of a polarizing beam splitter used for the separation of two polarized light beams (P-polarized and S-polarized) in a polarization conversion element as described above.

Polarizing beam splitters are formed by layering two films with different refractive indices, such as $MgF_2$ (refractive index: 1.39) and $TiO_2$ (refractive index: 2.30) in alternation between surfaces of transparent external media or a pair of external media. With such a polarizing beam splitter, the polarized light is separated according to the following principle. When P-polarized light is incident on such a multilayer film at the so-called Brewster angle, then it is not reflected at all at the boundary faces, and is transmitted 100%. For S-polarized light, on the other hand, when the thickness of the layers of the multilayer film is optimized, the light that is reflected at the boundary faces between the layers is reinforced due to optical interference effects, and as a result, the intensity of the reflected S-polarized light is increased for the entire multilayer film.

In order to achieve a bright image display in projection display systems, optical systems with a small F-number (focal length / lens diameter) are used so as to take in more of the light from the light source. But when the maximum angle θ defined by the optical axis and the light beam incident on the polarizing beam splitter is expressed as

$$\theta = \tan^{-1}(1/2F),$$

then this angle θ becomes about 9.5° when using for example a lens with F = 3.0. When the light beam varies so much from the optical axis, then the film thickness of the multilayer film does not have the optimum value anymore, so that the polarization selectivity decreases, reducing the contrast of the displayed image and diminishing the brightness instead. More specifically, the S-waves, for example, that are incident on the light valve are reflected as S-waves by the black portions of the display image, reflected again by the polarizing beam splitter and not entering the optical projection system should be displayed as black on the screen, but S-waves whose direction strays too far from the optical axis do not become completely zero and a transmitted component remains, so that light reaches the portions that actually should be displayed as black, and the offset for black is increased (diminishing the contrast).

That is to say, in image display systems using conventional polarizing beam splitters, the polarizing beam splitters do not have a high polarization selectivity with respect to light beams whose direction strays from the optical axis, so that there is the problem that it is difficult to increase the brightness and the contrast of the displayed image.

Furthermore, in recent years, applications for portable displays, such as monitors for car navigation systems and personal video or image display systems, are on the rise. These are positioned as low-power consuming displays for head-up displays and portable information terminals (also called "mobile tools") such as mobile phones. What is demanded for all these displays is small size, light weight, flat dimensions, and a low power consumption. Moreover, in head-up displays, it is necessary to allow switching between the displayed image and the outside world, and it is desirable that the screen is transparent, i.e. a so-called "see-through screen".

However, usually, image display systems using liquid crystal display elements modulate the polarization direction of incident light in accordance with the strength of the electric field that is applied to the liquid crystal display element as described above, and bright and dark image information is displayed utilizing the fat that the transmittance of the polarizers arranged in cross nicol arrangement before and after the liquid crystal display element depends on the polarization of the incident light. With this arrangement, the transmittance of the polarizers is low, because they are absorbing. Furthermore, because the polarizers are arranged in cross nicol configuration, there is almost no light transmittance with this configuration of the polarizers alone, leading to a black state. Consequently, in combination with an image display, it is difficult to obtain external information through the liquid crystal panel and there is the problem that it cannot be used as a head-up display of the see-through type.

Furthermore, the polarizers are configured such that due to the absorption of light, they let only certain polarization components through, so that the light that is absorbed by the polarizers is converted into heat inside. Therefore, as the amount of incident light increases, the influence of heat generated in the polarizers cannot be ignored, which leads to the problem that the function of light modulation of the polarizers is diminished, and the element is degraded.

Furthermore, a liquid crystal display is not a self-emitting device like a CRT, so that it needs its own light source for image display. The proportion of power used for the light source accounts for about one half of the total power consumption of liquid crystal displays, and is a big obstacle on the way to lower power consumption. Therefore, systems have been studied that display images without using an own light source for illumination. Examples of such systems are reflection-type image display systems that combine a liquid crystal display element and a reflection plate and utilize external light, such as natural light or room lighting, as the light source. With such a configuration, they do not need their own light source, so that lower power consumption becomes possible. Generally, in reflection-type image display systems utilizing external light, external light reflected at the surface of the glass substrate overlaps with the displayed image, thus diminishing the contrast of the displayed image and making the image more difficult to see. Therefore, a hologram is arranged on the display surface, and it is attempted to improve the visibility by separating the direction of the surface reflections and the image display direction.

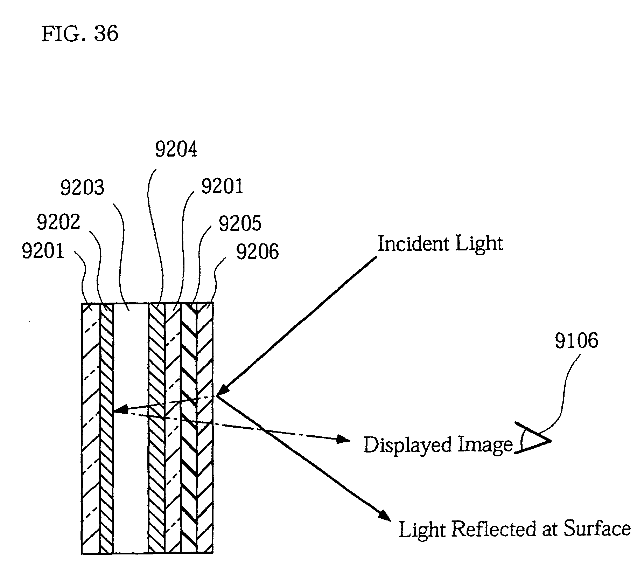

More specifically, systems are know as described for example in "Design of Hologram for Brightness Enhancement in Color LCDs" by G.T. Valliath, SID98 DIGEST 44.5L, p.1139. This image display system has a configuration as shown for example in Fig. 36. That is to say, light that is incident from outside enters the hologram 9206 arranged on the front surface where it is subject to the diffractive behavior due to the grating structure of the hologram, and bending the propagation direction, the light enters the polarizer 9205. The polarizer 9205 lets only certain polarization components (P-waves or S-waves) pass, and passing an RGB color filter 9204 and a liquid crystal layer 9203, the light is reflected by an internal reflection mirror 9202, and passes again through the liquid crystal layer 9203. While it passes twice through the liquid crystal layer 9203, it is polarization modulated as described above, and light whose polarization direction corresponds to the image signal is emitted from the liquid crystal layer 9203. Then, certain polarization components that have passed through the polarizer 9205 are diffracted by the hologram 9206, changing their propagation direction, and emitted in the direction of the dash-dotted line, where they are perceived by an observer 9106.

In this manner, using a hologram on the surface makes it possible to separate the direction of surface reflections of incident light (glare) from the display direction of the image. That is to say, the visibility of the displayed image can be improved by eliminating the influence of contrast reductions due to the components reflected at the surface.

However, since the hologram bends the direction of the light-waves due to its diffractive behavior, the diffraction angle depends on the wavelength of the light-waves. Therefore, there is the problem that color shifts depending on the wavelength occur in the image, in which the display direction is changed by diffraction.

Furthermore, in such a reflection-type system, the display condition of the image changes with the condition of the external light that is used as illumination light. For example, if the illumination light is dark, as in a dark room at night, or at places where there is no usable illumination light, then it becomes difficult to view the displayed image information. Therefore, a configuration is desirable that can be switched between external light and a backlight serving as an internal light source, depending on the place of usage and the environmental conditions, and which combines lower power consumption and higher versatility for displaying image information. But in order to utilize external light, a reflection-type configuration is suitable, in which one polarizer is arranged on the front surface of the liquid crystal display element, and in order to utilize internal light, a transmission-type configuration is suitable, in which polarizers are arranged in cross nicol configuration on the front and the back of the liquid crystal display element. To achieve both systems at the same time, a configuration with two polarizers is conceivable, but if absorbing polarizers are used, then the transmittance is low, and with an image display of the reflection-type with external light, the brilliance on the screen decreases considerably, degrading the image quality. Consequently, there is the problem that it is difficult to combine the use of an internal light source with external light.

## DISCLOSURE OF THE INVENTION

In view of the aspects discussed above, it is an object of the present invention to provide a polarized illumination system of a simple configuration, in which no strict positional alignment is necessary, and in which a high polarization conversion efficiency is achieved, as well as an image display system, which uses such a polarized illumination system, and in which a bright image with high contrast is achieved. It is another object of the present invention to provide a diffractive optical element that can be used for such polarized illumination systems or image display systems, which has a reliably high polarization selectivity and diffraction efficiency, and which is inexpensive.

It is a further object of the present invention to provide an image display system with high visibility from a predetermined display direction, an image display system, in which see-through display is possible, and a image display system with low power consumption using both external light and a backlight serving as an internal light source.

In order to attain these objects, a polarized illumination system in accordance with a first aspect of the present invention includes:

    a light source;
    an integrator made of a first lens array and a second lens array; and

a plurality of diffractive optical elements including liquid crystal molecules aligned in a periodic structure;

wherein the diffractive optical elements diffract light that is incident from the light source at angles that are symmetric with respect to the optical axis or to at least one plane including the optical axis.

With this configuration, predetermined components of the light incident from the light source (P-waves or S-waves) are diffracted in directions that are symmetric with respect to, for example, the optical axis, so that variations in the diffraction angle due to wavelengths differences point into opposite directions. Consequently, when the diffracted light is overlapped on the illuminated object, for example the light valve, the influence of these diffraction angle variations is cancelled, so that color variations in the light irradiated on the light valve can be reduced.

According to a second aspect of the present invention, a polarized illumination system includes:

a light source;

an integrator made of a first lens array and a second lens array; and

a first and a second diffractive optical element including liquid crystal molecules aligned in a periodic structure;

wherein the diffractive optical elements are provided with a periodic structure such that an angle at which the diffractive optical elements diffract light that is incident from the light source is smaller at a peripheral portion than at a central portion near the optical axis.

It is preferable that a diffraction angle θ of the first diffractive optical element satisfies θ ≧ tan$^{-1}$a/d, wherein "a" is the width of a light beam focused onto the diffractive optical elements by the integrator, and "d" is the spacing between the first and the second diffractive optical element in the propagation direction of the light.

With this configuration, overlapping of transmitted light and diffracted light from the diffractive optical elements is prevented or suppressed at the center, where the cross-sectional area of the light beams is large, so that P-waves and S-waves can be better separated, while the widening of the diffracted light at the periphery is suppressed and the light beams are converged on the light valve at a smaller angle, so that which prevents contrast reductions in the displayed image and makes it possible to use a cheaper lens with small effective diameter as the projection lens.

According to a fourth aspect of the present invention, a polarized illumination system includes:

a light source;

an integrator made of a first lens array and a second lens array; and

a diffractive optical element including liquid crystal molecules aligned in a periodic structure disposed between the first lens array and the second lens array;

wherein the second lens array is made of a group of lenses, in which lenses whose aperture center matches with their curvature center are arranged in alternation with lenses whose aperture center is different from their curvature center.

With this configuration, transmitted light from the diffractive optical element enters the group of lenses whose aperture center matches with their curvature center, whereas diffracted light enters the group of lenses whose aperture center is different from their curvature center whereby it is possible to arrange the direction of the light paths of the light beams diffracted by the diffractive optical element to be substantially the same as the direction of the light paths before the diffraction, so that it is possible to separated the P-waves and the S-waves with only one diffractive optical element, making it possible to align the directions of both light paths to substantially the same direction.

According to a sixth aspect of the present invention, a polarized illumination system includes:

a light source;

an integrator made of a first lens array and a second lens array;

a diffractive optical element including liquid crystal molecules aligned in a periodic structure; and

a phase plate made of a plurality of λ/2 plates;

wherein a surface area of the λ/2 plates on the phase plates at a peripheral portion is smaller than at a center portion near the optical axis.

More specifically, it is advantageous that when for example a plurality of light beams focused by the integrator enter the phase plate, a surface area of these light beams on the phase plate is substantially equal to a surface area of the λ/2 plates on the phase plates.

With this configuration, the polarization directions of light beams with different cross-sectional areas at the center and at the periphery can converted as appropriate, so that a higher polarization conversion efficiency can be attained.

According to an eighth aspect of the present invention, in a polarized illumination system in accordance with the sixth aspect of the present invention, the phase plate is formed by sealing a photocuring liquid crystal into a region that is sandwiched between transparent insulating substrates on which thin films have been formed that are made of a polymer that has been subjected to an alignment process by rubbing, and irradiating light through a mask.

With this configuration, it is easy to form such a phase plate with high precision.

According to a thirteenth aspect of the present invention, a polarized illumination system includes:

> a light source;
> a diffractive optical element including liquid crystal molecules aligned in a periodic structure;
> a reflection-type light valve;
> an optical projection system for magnifying and projecting optical images on the light valve;
> wherein the diffractive optical element reflects those components of light incident from the light source that are polarized in a first direction, wherein light components that are polarized substantially perpendicular to these polarized components of incident light are incident on the light valve, and light components polarized in the first direction reflected by the light valve are guided toward the optical projection system.

With this configuration, due to the high polarization selectivity and diffraction efficiency of the diffractive optical element, it is possible to let predetermined polarized components be incident no the light valve with high light efficiency, guide only predetermined polarization components of the light beams that have been polarization modulated with the light valve to an optical projection system, so that a bright image with high contrast can be displayed. Furthermore, if light beams from the light source are substantially separated by color into three light beams of the colors red, green and blue, and if a plurality of diffractive optical elements having a periodic structure with different pitches associated with the three light beam are provided, then it is possible to increase the light usage efficiency with respect to light of these wavelengths, so that an even brighter color image with better contrast can be attained.

According to a seventeenth aspect of the present invention, a method for manufacturing a diffractive optical element includes:

> a first step of providing a liquid crystal and at least one of a homomer, an oligomer, and a polymer in a region sandwiched by transparent insulating substrates; irradiating light with a periodical intensity distribution on the transparent insulating substrates by interference of two laser beams; partially curing said at least one of a homomer, an oligomer, and a polymer; and
> a second step of aligning the liquid crystal molecules with respect to the partially cured region.

With this method, it is possible to form a diffractive optical element with high polarization selectivity and diffraction efficiency. Furthermore, by including a photopolymerization initiator and a pigment, these steps can be carried out with high efficiency.

According to a nineteenth aspect of the present invention, a method for manufacturing a diffractive optical element includes:

> a first step of forming an alignment-processed thin film made of a polymer on a transparent insulating substrate; aligning and then curing photo- or heat-curing liquid crystal molecules on the thin film; and a second step of forming a polymer thin film on the liquid crystal molecules and then forming photo- or heat-curing liquid crystal molecules such that they are aligned substantially perpendicular to the direction of the previously mentioned liquid crystal molecules;
> wherein the first step and the second step are carried out a plurality of times.

According to a twentieth aspect of the present invention, a method for manufacturing a diffractive optical element includes:

> a plurality of steps of forming an alignment-processed thin film made of a polymer on a transparent insulating substrate; aligning and then curing photo- or heat-curing liquid crystal molecules on the thin film;
> wherein liquid crystal molecule layers with substantially the same ordinary refractive index of the liquid crystal molecules and different extraordinary refractive index are layered in alternation.

In this method, it is preferable that the diffractive optical element includes aligned liquid crystal molecules, that a photopolymerizing monomer or photocrosslinking liquid crystal polymer or oligomer is added, and that the orientation of the director of the liquid crystal is fixed by irradiation of light of the UV spectrum. It is also preferable that the step of curing the liquid crystal molecules is performed in an inert gas atmosphere.

With this method, a diffractive optical element with layers of the desired thickness, alignment of the liquid crystal molecules and refractive index can be formed easily without exposure with laser light interference fringes.

According to a twenty-third aspect of the present invention, a method for manufacturing a diffractive optical element includes:

> a first step of providing a liquid crystal and at least one of a homomer, an oligomer, and a polymer in a region sandwiched by transparent insulating substrates; irradiating light with a periodical intensity distribution on the transparent insulating substrates by interference of two laser beams; and partially curing said at least one of a homomer, an oligomer, and a polymer; and
> a second step of aligning the liquid crystal molecules with respect to the partially cured region;
> wherein a temperature of the transparent insulating substrates during the irradiation is maintained within a temperature range of substantially half the temperature at transition of the liquid crystal from nematic to isotropic (referred to in short as "N-I transition temperature" below) to a temperature approximately 10°C below the N-I transition temperature.

With this method, a diffractive optical element with high polarization selectivity and diffraction efficiency can be formed easily and reliably. Furthermore, by including a photopolymerization initiator and a pigment in the diffractive optical element, these steps can be carried out with high efficiency.

According to a twenty-fourth aspect of the present invention, a method for manufacturing a diffractive optical element includes:

a first step of providing a liquid crystal and at least one of a homomer, an oligomer, and a polymer in a region sandwiched by transparent insulating substrates on which thin films have been formed that are made of a polymer that has been subjected to an alignment process by rubbing; and irradiating light with a periodical intensity distribution on the transparent insulating substrates by interference of two laser beams to partially cure said at least one of a homomer, an oligomer, and a polymer; and
a second step of aligning the liquid crystal molecules with respect to the partially cured region; wherein the alignment direction of the liquid crystal molecules substantially coincides with the rubbing direction of the polymer thin films.

With this method, a diffractive optical element with even higher polarization selectivity and diffraction efficiency can be formed easily and reliably.

According to a twenty-fifth aspect of the present invention, a method for manufacturing a diffractive optical element includes:

a step of providing a liquid crystal and at least one of a homomer, an oligomer, and a polymer in a region sandwiched by transparent insulating substrates; and irradiating light with an intensity that has a periodic structure with a pitch of about 1μm to 10μm onto a predetermined region on the transparent insulating substrates; and
a step of irradiating light on a region enclosing said predetermined region.

With this method, it is not necessary to perform a step of gluing the transparent insulating substrates together with a sealing agent, so that the steps for manufacturing the diffractive optical element can be simplified, and the manufacturing costs can be reduced.

According to a twenty-sixth aspect of the present invention, a method for manufacturing a diffractive optical element includes:

a first step of providing a liquid crystal and at least one of a homomer, an oligomer, and a polymer in a region sandwiched by transparent insulating substrates; irradiating light with a periodical intensity distribution on the transparent insulating substrates by interference of two laser beams; and partially curing said at least one of a homomer, an oligomer, and a polymer;
a second step of aligning the liquid crystal molecules with respect to the partially cured region; and
a step of periodically forming phase plates on the transparent insulating substrate on the side that is opposite to the light irradiation side.

With this method, a periodic phase plate with high precision can be formed easily, and the diffractive optical element and the phase plate are formed in one piece, so that the configuration and assembly steps for a device using such a diffractive optical element are simplified.

It is also possible to combine at least two steps of any of the twenty-third to twenty-sixth aspect of the present invention.

According to a thirty-third aspect of the present invention, an image display system includes:

a polarization modulation element; and
a diffractive optical element including liquid crystal molecules aligned in a periodic structure.

Here, the image display system can further include a reflection plate or a phase-retardation film comprises a λ/4 plate, a polarizer, a scatter plate, or a polarization conversion film.

With this configuration, due to the high polarization selectivity and diffraction efficiency of the diffractive optical element, it is possible devise a transmission-type or reflection-type or a color image display system that can display bright images of high contrast with high light efficiency.

According to a thirty-ninth aspect of the present invention, a method for manufacturing a diffractive optical element includes:

a first step of providing a liquid crystal and at least one of a homomer, an oligomer, and a polymer in a region sandwiched by transparent insulating substrates; irradiating light with a periodical intensity distribution on the transparent insulating substrates by interference of two laser beams; and partially curing said at least one of a homomer, an oligomer, and a polymer; and
a second step of aligning the liquid crystal molecules with respect to the partially cured region;
wherein the insulating substrates on the light irradiation side and the opposite side are arranged on a substrate that substantially absorbs the laser light.

With this method, the laser light that has passed through the insulating substrates on the light irradiation side and the opposite side is absorbed by this substrate, which prevents that due to the reflection light from the substrates or the jig, a grating with a pitch that is different from the design value is formed as well as the occurrence of speckle noise. Consequently, a diffractive optical element with high diffraction efficiency can be formed.

According to a fortieth aspect of the present invention, a method for manufacturing a diffractive optical element includes:

a first step of providing a liquid crystal and at least one of a homomer, an oligomer, and a polymer in a region sandwiched by transparent insulating substrates; irradiating light with a periodical intensity distribution on the transparent insulating substrates by interference of two laser beams; and partially curing said at least one of a homomer, an oligomer, and a polymer; and

a second step of aligning the liquid crystal molecules with respect to the partially cured region;

wherein a film having anisotropic scattering properties, scattering light beams incident at angles from a predetermined range of incidence angles and substantially transmitting light beams that are incident at angles outside a predetermined range of incidence angles, is arranged on the transparent insulating substrate on the irradiation side, and the transparent insulating substrate on the opposite side is arranged on a substrate that substantially absorbs the laser light.

With this configuration, a diffractive optical element with scattering properties or a diffractive optical element in which the widening angle of the diffractive light waves changes, because the two light beams during the laser light exposure are diverging or converging.

According to a forty-first aspect of the present invention, in a method for manufacturing a diffractive optical element according to the thirty-ninth or the fortieth aspect, the transparent insulating substrates are approximately several dozen to several hundred μm thick.

By using for example a plastic film of this thickness, a diffractive optical element can be obtained that is extremely thin and has excellent polarization separation properties and high efficiency. That is to say, the diffractive optical element can be devised as a film, and can be treated as a polarization film or a film-shaped filter, so that the range of possible applications increases widely, and in an image display system using such a diffractive optical element, it can be applied by so-called "retrofitting" in a process that is separate from the main assembly process.

According to a forty-ninth and a fiftieth aspect of the present invention, in a method for manufacturing a diffractive optical element according to the thirty-third aspect, a portable information terminal device or a head-up display include an image display system according to the thirty-third aspect of the present invention.

With such configurations, these devices can be provided with excellent display properties (e.g. visibility), operability, and versatility.

According to a fifty-second aspect of the present invention, a polarized illumination system, includes:

a light source;
a diffractive optical element including liquid crystal molecules aligned in a periodic structure;
a phase plate; and
a light-conducting plate.

It is preferable that the diffractive optical element has the function to diffract those components of incident light that are polarized in a first direction, and to substantially transmit those components that are substantially perpendicular to those components of the incident light that are polarized in the first direction. It is also preferable that the diffractive optical element has a periodic structure that is oblique to the optical axis of the liquid crystal molecules.

With this configuration, a large amount of light from the light source with aligned polarization can be emitted, so that in combination with a polarization modulation element, a bright image of high contrast can be displayed with high light efficiency.

According to a fifty-ninth aspect of the present invention, a method for manufacturing a diffractive optical element includes:

providing a liquid crystal and at least one of a homomer, an oligomer, and a polymer in a region sandwiched by transparent insulating substrates; first, irradiating light with a periodical intensity distribution through a mask that is partitioned into a plurality of regions on the transparent insulating substrates by interference of two laser beams; and then, irradiating uniform light through a mask having a pattern corresponding to an inversion of the previously mentioned mask.

With this method, it is possible to form the plurality of regions with the same structure as if partitioned with a sealing agent, so that by cutting the regions apart, it is possible to manufacture a plurality of diffractive optical elements efficiently and with high uniformity, and to reduce the manufacturing costs.

According to a sixty-fourth aspect of the present invention, a diffractive optical element is made by

a first step of providing a liquid crystal and at least one of a homomer, an oligomer, and a polymer in a region sandwiched by transparent insulating substrates; irradiating light with a periodical intensity distribution on the transparent insulating substrates by interference of two laser beams; and partially curing said at least one of a homomer, an oligomer, and a polymer; and

a second step of aligning the liquid crystal molecules with respect to the partially cured region.

Here, it is preferable that the alignment direction of the liquid crystal molecules in the second step is substantially perpendicular to a wall of a portion that has been partially cured in the first step.

It is also preferable that the predetermined temperature is within a temperature range of substantially half the temperature at the transition of the liquid crystal from nematic to isotropic (referred to in short as "N-I transition temperature" below) to a temperature approximately 10°C below the N-I transition temperature.

Thus, a diffractive optical element with high polarization selectivity and diffraction efficiency can be attained.

According to a sixty-eighth aspect of the present invention, a polarized illumination system according to the first aspect of the present invention is characterized in that the diffractive optical element is partitioned into four regions by two orthogonal lines through the optical axis, wherein those regions arranged in opposition to one another diffract light that is incident from the light source at angles that are symmetric with respect to a plane including the optical axis.

With this configuration, predetermined components of the light incident from the light source (P-waves or S-waves) are diffracted in directions that are symmetric with respect to a plane including the optical axis, so that the color variations in the color variations in the light irradiated on the light valve can be reduced, and the overlapping of light transmitted by and light diffracted by the diffractive optical element can be reduced considerably, so that the separation of P-waves and S-waves is increased, and the polarization conversion efficiency and the light efficiency is improved considerably.

BRIEF DESCRIPTION OF THE DRAWINGS

Fig. 1 is a cross-sectional view showing the configuration of a polarized illumination system in accordance with Embodiment A1.
Fig. 2 is a diagram illustrating the diffraction pattern of an alternative example of Embodiment A1.
Fig. 3 is a cross-sectional view showing the configuration of a polarized illumination system in accordance with Embodiment A2.
Fig. 4 is a cross-sectional view showing the configuration of a polarized illumination system in accordance with Embodiment A3.
Fig. 4(a) is a cross-sectional view of a diffractive optical element taken from above.
Fig. 4(b) is a front view of the diffractive optical element taken in the direction of the optical axis.
Fig. 4(c) is a diagram schematically illustrating the pattern of the light beams entering the diffractive optical element.
Figs. 5(a) to 5(d) are front views showing the patterns of the polarization conversion portion formed on the phase-retardation plate of the polarized illumination system according to Embodiment A4.
Fig. 6 is a process diagram illustrating a method for manufacturing the phase-retardation plate of Embodiment A4.
Fig. 7 is a diagram illustrating another method for manufacturing the phase-retardation plate of Embodiment A4.
Fig. 8 is a cross-sectional view showing the configuration of a diffractive optical element in accordance with Embodiment B1.
Fig. 9 is a perspective view showing the configuration of another diffractive optical element in accordance with Embodiment B1.
Fig. 10 is a diagram illustrating a method for manufacturing the diffractive optical element of Embodiment B1.
Fig. 11 shows graphs illustrating how the diffraction light intensity changes as the exposure process of the diffractive optical element of Embodiment B1 proceeds.
Fig. 12 shows graphs illustrating how the diffraction efficiency depends on the process temperature for the diffractive optical element of Embodiment B1.
Fig. 13 is a graph showing how the diffraction efficiency depends on the temperature after preparing the diffractive optical element of Embodiment B1.
Fig. 14 shows graphs illustrating how the diffraction efficiency depends on the angle of incidence at the diffractive optical element of Embodiment B1.
Fig. 15 is a graph showing how the contrast depends on the angle of incidence at the diffractive optical element of Embodiment B1.
Fig. 16 is a cross-sectional view showing the configuration of a diffractive optical element in accordance with Embodiment B2.
Fig. 17 is a process diagram illustrating a method for manufacturing the diffractive optical element of Embodiment B2.
Fig. 18 is a cross-sectional view showing the configuration of a diffractive optical element in accordance with Embodiment B3.
Fig. 19 is a diagram illustrating a method for manufacturing the diffractive optical element of Embodiment B5.
Fig. 20 is a diagram illustrating another method for manufacturing the diffractive optical element of Embodiment B5.
Fig. 21 is a diagram illustrating the configuration of an image display system in accordance with Embodiment C1.

Fig. 22 is a diagram illustrating the configuration of an image display system in accordance with C2.

Fig. 22(a) is a plan view of the second-level portion.

Fig. 22(b) is a plan view of the first-level portion.

Fig. 22(c) is a lateral view.

Fig. 23 is a diagram illustrating the configuration of a polarized illumination system in accordance with Embodiment C3.

Fig. 24 is a diagram illustrating the configuration of a polarized illumination system in accordance with Embodiment C4.

Fig. 25 is a diagram illustrating the configuration of an image display system in accordance with Embodiment D1.

Fig. 26 is a diagram illustrating the configuration of an image display system in accordance with Embodiment D2.

Fig. 27 is a diagram illustrating the configuration of an image display system in accordance with Embodiment D3.

Fig. 28 is a diagram illustrating the configuration of an image display system in accordance with Embodiment D4.

Fig. 29 is a diagram illustrating a method for manufacturing a diffractive optical element of Embodiment D5.

Fig. 30 is a diagram illustrating a method for manufacturing a diffractive optical element of Embodiment D6.

Fig. 31 is a diagram illustrating the configuration of an image display system in accordance with Embodiment D7.

Fig. 32 is a diagram illustrating the configuration of a portable information terminal device in accordance with Embodiment D10.

Fig. 33 is a diagram illustrating the configuration of a head-up display in accordance with Embodiment D11.

Fig. 34 is a cross-sectional view showing the configuration of a polarized illumination system in accordance with Embodiment D12.

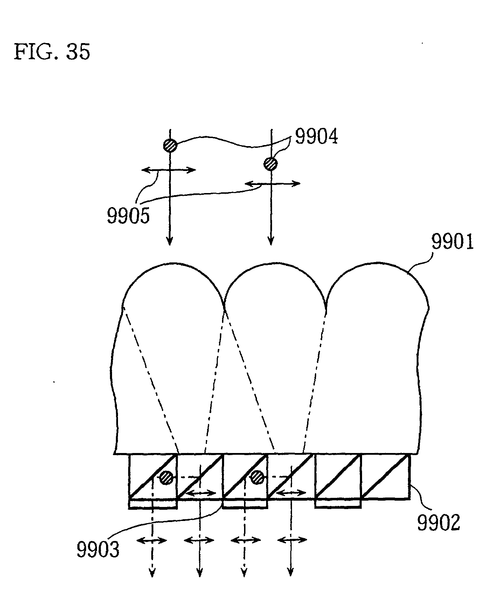

Fig. 35 is a cross-sectional view showing the configuration of a conventional polarization conversion device.

Fig. 36 is a diagram illustrating the configuration of a conventional image display system.

BEST MODE FOR CARRYING OUT THE INVENTION

The following is an explanation of the preferred embodiments of the present invention, with reference to the accompanying drawings.

Embodiment A1

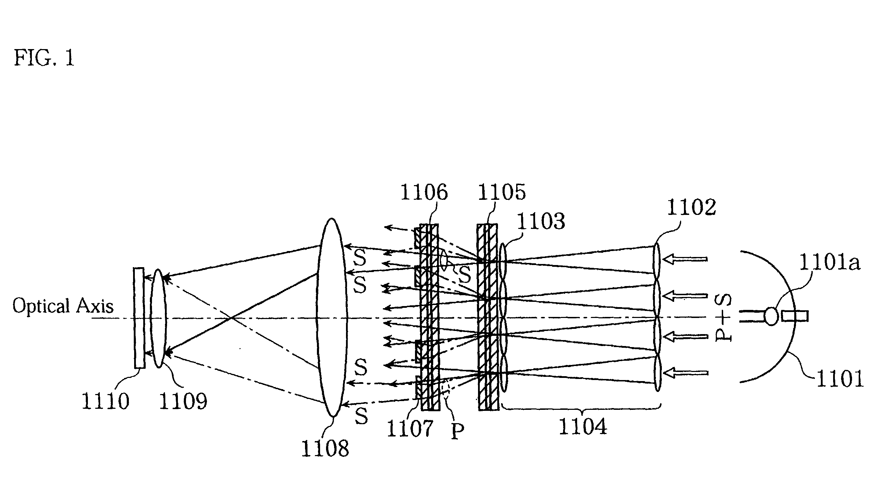

Fig. 1 illustrates a polarized illumination system that uses two diffractive optical elements and irradiates polarized light on a light valve displaying images by polarization modulation.

A light beam including a P-wave and an S-wave is that is emitted from a light source 1101 enters an integrator 1104 including a first lens array 1102 and a second lens array 1103. The first lens array 1102 and the second lens array 1103 each include a plurality of lenses, the lenses of the first lens array 1102 forming pairs with those of the second lens array 1103. The lenses of the first lens array 1102 bundle the light beam emitted by the light source 1101 and project an image of the light-emitting portion 1101a on the lenses of the second lens array 1103, whereas the lenses of the second lens array 1103 guide the incident light beams efficiently through a diffractive optical element 1105 and other elements to a light valve 1110.

The S-wave of the light beam emitted from the second lens array 1103 is transmitted by the diffractive optical element 1105 and the diffractive optical element 1106, which are both polarization selective, whereas the P-wave is diffracted for a predetermined diffraction angle by the diffractive optical element 1105 and diffracted by the diffractive optical element 1106 for the same diffraction angle but in opposite direction as with the diffractive optical element 1105. That is to say, the angles (with respect to the optical axis) of both the S-wave and the P-wave emitted by the diffractive optical element 1106 is the same as for light beams incident on the diffractive optical element 1105 and only their positions are shifted with respect to one another. The diffractive optical elements 1105 and 1106 diffract the light such that the diffraction directions (diffraction angles) of the P-waves are symmetrical to the optical axis and reduce non-uniformities in chromaticity and light intensity at the periphery of the light valve 1110, as will be explained below. The shift of the light paths increases with the diffraction angle of the P-wave and the distance between the diffractive optical elements 1105 and 1106. By constricting with the integrator 1104 the width (cross-sectional area of a light beam) of the light beams incident from each lens pair of the integrator 1104 on the diffractive optical element 1106 to about 1/2 of the pitch between the lenses, and setting the diffraction angle such that the shift of the light paths is about the same as the width of the light beams, the incidence area of the S-wave and the incidence area of the P-wave on the diffractive optical element 1106 can be separated reliably so that they do not overlap.

The region from which P-waves are emitted by the diffractive optical element 1106 is provided with a phase-retardation plate 1107 ($\lambda/2$-plate), so that the P-waves are converted into S-waves. That is to say, from the diffractive optical element 1106 provided with the phase-retardation plate 1107, a light beam having substantially the same width as the light beam emitted by the light source 1101 is emitted as an S-wave with aligned polarization, for all light beams passing through the lens pairs of the integrator 1104.

As for the light beams emitted by the diffractive optical element 1106 and the phase-retardation plate 1107, the light beams passing through the lens pairs of the integrator 1104 are superimposed upon one another by a converging lens 1108 and a field lens 1109, the light amount is made uniform, and the light beams are irradiated onto the light valve 1110. That is to say, the light amount variations caused by the fact that the light amount close to the optical axis of the light beam emitted by the light source 1101 is different from the light amount at the periphery are compensated.

The following is an explanation of the positioning of the integrator 1104 and the diffractive optical element 1105. The diffractive optical element 1105 is provided with a periodic structure in the μm-order, and light beams incident on the element are diffracted in the same manner, regardless on the position where the light is incident. Thus, the positional alignment of the diffractive optical element 1105 and the integrator 1104 does not have to be so exact, and a so-called "alignment-free configuration" is possible. Therefore, positional alignment can be achieved in a simple manner by forming the phase-retardation plate 1107 in correspondence with the pitch of the integrator on the diffractive optical element 1106 and adjusting the distance between the diffractive optical elements 1105 and 1106. Furthermore, the facility with which the alignment can be attained, is the same, for example when making the lenses of the first lens array 1102 and the second lens array 1103 smaller while increasing their number in order to improve the uniformity of the light beam, or when setting different sizes for different regions, for example making the lenses bigger near the center (near the optical axis) and making them smaller at the periphery in order to improve the light efficiency at the light valve 1110, and it is possible to employ such configurations without risking considerable increases in manufacturing costs.

The following is an explanation of how non-uniformities of the chromaticity and the light intensity at the periphery of the light valve 1110 are reduced by making the diffraction directions of the P-waves symmetrical with respect to the optical axis as described above.

First, this is explained for a light beam passing through one lens pair of the integrator 1104. The diffraction angle of the light beam due to the diffractive optical element 1105 depends on the wavelength of the light beam, and increases as the wavelength becomes longer. This means, P-waves of, for example, R (red), G (green) and B (blue) light included in the white light from the light source 1101 are chromatically separated before they enter the diffractive optical element 1106. The P-waves of the various colors entering the diffractive optical element 1106 are diffracted for the same diffraction angle but in opposite direction as with the diffractive optical element 1105, so that the light paths of the colored light beams are parallel to one another, but when entering the light valve 1110, they are shifted for a distance that depends on the difference between the diffraction angles and the distance between the diffractive optical elements 1105 and 1106. Thus, the chromaticity and the light intensity at the periphery of the light valve 1110 becomes non-uniform.

Here, however, by making the diffraction directions of the P-wave symmetrical with respect to the optical axis, the colored P-waves in light beams passing through lens pairs of the integrator 1104 that are arranged symmetrically with respect to the optical axis are shifted in opposite directions, so that the color shifts at the periphery of the light valve 1110 cancel each other out, and the non-uniformities in chromaticity and light intensity are reduced. More specifically, the light beams emitted from the regions above the optical axis of the diffractive optical element 1106 in Fig. 1 are shifted upward in the order blue light, green light, red light when they enter the light valve 1110, so that the intensity of red light at the upper portion of the light valve 1110 in Fig. 1 becomes relatively large. On the other hand, also the light beams emitted from the regions below the optical axis of the diffractive optical element 1106 are shifted downward in the order blue light, green light, red light when they enter the light valve 1110, so that the intensity of red light at the upper portion of the light valve 1110 in Fig. 1 becomes relatively low. Consequently, the intensity of red light averages out, and the non-uniformities in the chromaticity and the light intensity are decreased, as described above.

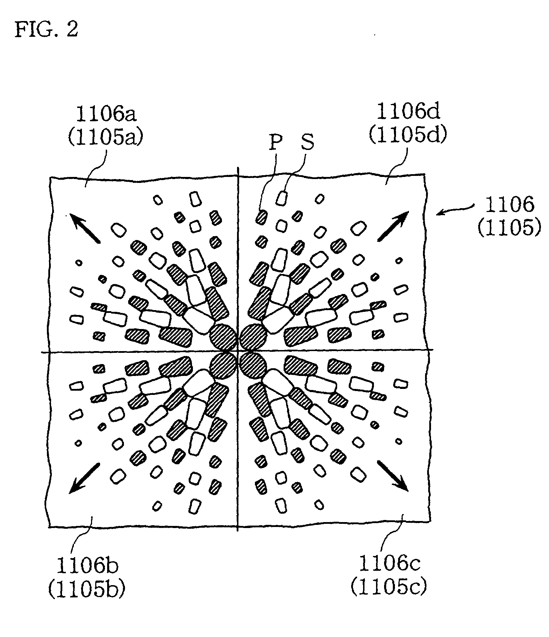

It should be noted that to decrease the non-uniformities in the chromaticity etc., it is not strictly necessary to arrange the diffraction directions symmetrically with respect to the optical axis as described above, and it is also possible to arrange them symmetrically with respect to a plane including the optical axis, for example symmetrically with respect to the horizontal direction or the vertical direction of the display screen. Furthermore, it is also possible to arrange them symmetrically with respect to a plurality of directions. More specifically, it is possible to partition the diffractive optical elements 1105 and 1106 with orthogonal lines through the optical axis into four regions 1105a to 1105d and 1106a to 1106d, and arrange the diffraction of the diagonally opposite regions 1105a, 1106a and 1105c, 1106c and further 1105b, 1106b and 1105d, 1106d to be opposite from one another (as indicated by the arrows), as shown in Fig. 2. In this case in particular, as shown in Fig. 2, it is possible to make the overlap between the S-wave and the P-wave entering the diffractive optical element 1106 very small, so that the light efficiency is improved considerably.

### Embodiment A2

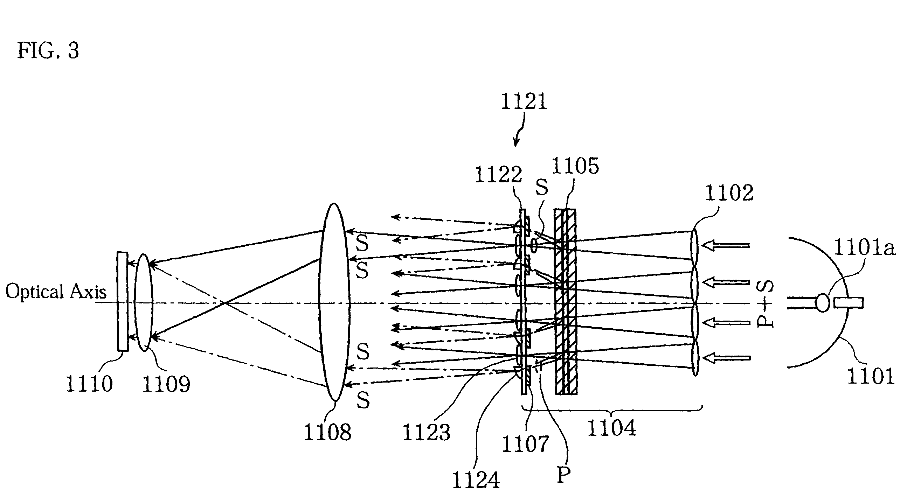

A polarized illumination system using only one diffractive optical element is explained with reference to Fig. 3. It should be noted that in this and the following embodiments, structural elements that are the same as in other embodiments, such as the previous Embodiment A1, are denoted by the same or corresponding numerals, and their further explanation is omitted.

This polarized illumination system differs from the one in Embodiment A1 in that the diffractive optical element 1105 is arranged between the first lens array 1102, and that a second lens array 1121 is provided instead of the second lens array 1103. The second lens array 1121 is made of a transparent substrate 1122, lenses 1123, lenses 1124, and a phase-retardation plate 1107. The lenses 1123 are the same as the lenses of the second lens array 1103 in Embodiment A1, except that their diameter is only 1/2 of that of the lenses in the first lens array 1102. The lenses 1123 are arranged at the positions where the S-waves that have passed through the diffractive optical element 1105 are incident. The lenses 1124, on the other hand, are arranged at the positions where the P-waves that have been diffracted by the diffractive optical element 1105 are incident. The lenses 1124 are shaped as eccentric partial convex lenses (or substantially shaped as combinations of prisms and convex lenses), so that they refract entering P-waves that have been diffracted by the diffractive optical element 1105 by the same angle as the diffraction angle by which P-waves are diffracted by the diffractive optical element 1106 of Embodiment A1, emitting them in the same direction as S-waves. The phase-retardation plate 1107 is arranged at positions corresponding to the lenses 1124. It should be noted that the position of the lenses 1124 and the phase-retardation plate 1107 on the optical axis can also be opposite from the arrangement shown in Fig. 3, and that it is not strictly necessary to provide the transparent substrate 1122.

Also with this configuration, as with Embodiment A1, S-waves with aligned polarization can be irradiated on the light valve 1110, and the diffraction directions of the P-waves are symmetrical with respect to the optical axis, which reduces non-uniformities of chromaticity and light intensity at the periphery of the light valve 1110.

Furthermore, only one diffractive optical element 1105 is used in this configuration, so that it is possible to simplify the configuration, and to improve the polarization conversion gain. That is to say, in Embodiment A1, two diffractive optical elements 1105 and 1106 are provided, so that both the P-wave and the S-wave are subjected twice to diffraction or transmission. Thus, the polarization conversion gain with respect to the incident light beams is equal to the square of the diffraction efficiency. More specifically, if the P-wave diffraction efficiency is for example 90% and the S-wave transmittivity is ca. 95%, then the theoretical polarization conversion gain is the sum of the square of the P-wave diffraction efficiency and the square of the S-wave transmittivity: $0.9 \times 0.9 + 0.95 \times 0.95 = $ ca.1.7. In this embodiment, on the other hand, the P-wave and the S-wave are subjected only once each to diffraction and transmission, so that a theoretical polarization conversion gain of about 0.9 + 0.95 = 1.85 can be attained. It should be noted that this improvement of the polarization conversion gain can also be achieved when the diffraction directions of the P-waves are not symmetric with respect to the optical axis, that is, regardless of whether or not the non-uniformities in chromaticity and light intensity at the periphery of the light valve 1110 are decreased.

Embodiment A3

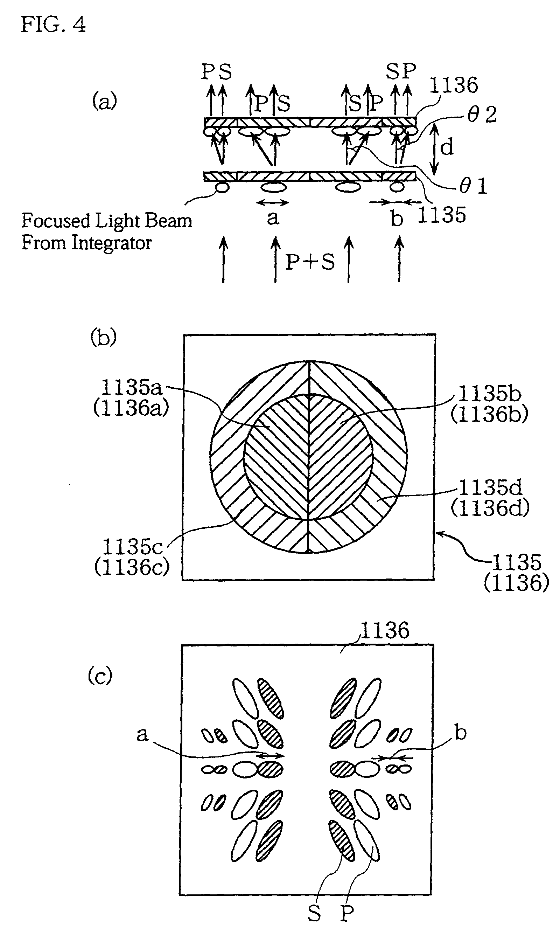

A polarized illumination system using a diffractive optical element whose diffraction angle at the center (near the optical axis) differs from the diffraction angle at the periphery is explained with reference to Fig. 4.

Fig. 4(a) is a cross-sectional view of diffractive optical elements 1135 and 1136, viewed from above.

Fig. 4(b) is a front view of the diffractive optical elements 1135 and 1136, viewed in optical axis direction.

Fig. 4(c) schematically illustrates the pattern of the light beams entering the diffractive optical element 1136.

The polarized illumination system of this embodiment differs from the one of Embodiment A1 in that it is provided with the diffractive optical elements 1135 and 1136 instead of the diffractive optical elements 1105 and 1106, whereas other structural elements are the same. The light-emitting portion 1101a of the light source 1101 has a finite size (arc length) of several mm, so that the focused light beam of the integrator 1104 does not form a perfect spot. More specifically, the image of the light-emitting portion 1101a that is formed by the first lens array 1102 on the second lens array 1103 takes on a shape that is radially elongated from the optical axis in correspondence with the arc shape, and as shown in Fig. 4(c), light beams with substantially the same shape as the image of the light-emitting portion 1101a incident on the diffractive optical element 1136. Moreover, the optical path of the light beams incident on the diffractive optical element 1136 at the periphery is longer than the optical path of the light beams at the center, so that the patterns of the light beams are larger towards the center and smaller towards the periphery.

If polarized light is separated with the diffractive optical element 1135 in the manner shown in Embodiment A1 (i.e. diffracting the P-waves and transmitting the S-waves), and the polarization direction is converted with the phase-changing plate 1107, then, to make the polarization conversion gain large, it is necessary to separate the transmitted beams and the diffracted beams entering the diffractive optical element 1136 from the diffractive optical element 1135 such that they overlap as little as possible on the diffractive optical element 1136. Therefore, it is not preferable that the diffraction angle of the diffractive optical elements 1135 and 1136 is set to a value that is smaller than a predetermined angle. That is to say, when the diffraction angle is set to a small angle at which polarization separation of the small-patterned light beams at the periphery is possible, then the large-patterned light beams at the center will overlap, and the polarization conversion gain drops, because polarization conversion is not performed completely in these overlapping portions, and thus, the light efficiency at the light valve 1110 decreases. If, on the other hand, the diffraction angle is set to a large value in accordance with the large-patterned light beams at the center, then the spacing between the polarization-separated light beams at the periphery becomes larger than necessary. In that case, the width of the entire light beam after polarization conversion becomes larger than the width of the light beams emitted by the light source 1101, so that less light beams are effectively guided to the light valve 1110, and, again, the light efficiency drops. Furthermore, when attempting to guide all polarization separated light beams to the light valve 1110, the convergence angle of the light beams entering the light valve 1110 becomes large, so that the contrast of the displayed image decreases, and it becomes necessary to use an expensive lens with a large effective diameter for the lens projecting the image of the light valve 1110.

To solve this problem, in this embodiment, depending on the width of the light beams focused by the integrator 1104, the diffraction angle in each region is optimized in accordance with the distance from the optical axis at the diffractive optical elements 1135 and 1136, thus improving the light efficiency. More specifically, the diffractive optical elements 1135 and 1136 are divided into regions 1135a, 1135b, 1136a, and 1136b where the P-wave diffraction angle is θ1, and regions 1135c, 1135d, 1136c, and 1136d where the P-wave diffraction angle is θ2. Furthermore, in order to reduce non-uniformities of the chromaticity at the periphery as shown in Embodiment A1, the diffraction angles of the regions 1135a and 1135b etc. are the same but the diffraction directions are opposite. To separate the S-wave pattern and the P-wave pattern entering the diffractive optical element 1136 accurately so that they do not overlap, it is preferable that the diffraction angle θ1 is set such that the position of the P-wave patterns is shifted with respect to the S-wave patterns by at least the width "a" of the light beams that the integrator 1104 focuses near the center. Consequently, it is preferable that θ1 is set to $\theta1 \geqq \tan^{-1}a/d$, wherein "d" is the spacing between the two diffractive optical elements 1135 and 1136. Also, it is preferable that θ2 is set to at least $\tan^{-1}b/d$, wherein "b" is the width of the light beams focused on the periphery, and to make θ2 as close to this value as possible.

When the patterns of the light beams focused by the integrator 1104 are arranged at a dense spacing, it can happen that the diffracted P-waves near the center overlap with the transmitted S-waves at the portions next further away from the optical axis. This may harm the light efficiency, and since the light amount of the light beams incident on the diffractive optical element 1135 is larger the closer the light beams are to the optical axis, a higher light efficiency can be attained when setting the diffraction angle θ1 such that the light beams do not overlap in areas close to the optical axis.

Moreover, strictly speaking, the diffraction angles θ1 and θ2 depend on the wavelength, but it is possible to attain a light efficiency that is high on average by setting the diffraction angles θ1 and θ2 such that the afore-mentioned conditions are met at for example 550nm, which is the central wavelength of visible light.

The following results were obtained when evaluating the polarization conversion gain of a polarized illumination system of Embodiment A1 and of this embodiment, in contrast with a polarized illumination system without diffractive optical elements 1105 and 1106 (that is, without polarization conversion). In the polarized illumination system of this embodiment, the diffraction angle θ1 at the center was set to θ1 = 35°, the diffraction angle θ2 at the periphery was set to θ2 = 30°, and the distance d between the diffractive optical elements 1135 and 1136 was set to d = 7mm. The width of the light beams focused by the integrator 1104 onto the diffractive optical element 1135 was about 5mm. To be specific, the polarization conversion gain was measured as follows. A polarizers set up to transmit S-waves was arranged at the position of the light valve 1110, and a photometer was placed directly behind that. The amount of light transmitted by the polarizer was measured, the ratio to the amount of light of a polarized illumination system without polarization conversion was determined, and this value was taken as the polarization conversion gain. With this measurement, it was found that the polarization conversion gain with Embodiment A1 was about 1.3 to 1.4, whereas in this embodiment, the polarization conversion gain was about 1.4 to 1.6, even higher than in Embodiment A1.

In the foregoing examples, two different diffraction angles θ1 and θ2 were used, but it is also possible to partition the diffractive optical elements 1135 and 1136 into even more regions, and decrease the diffraction angle gradually from the center toward the periphery, thereby improving the polarization conversion gain even further.

Furthermore, examples were shown, in which the diffraction directions of the diffractive optical elements 1135 and 1136 are symmetrical with respect to the horizontal direction (that is, a plane that is perpendicular to the paper plane in Fig. 4 and including the optical axis), but it is also possible to arrange them symmetrically with respect to the optical axis as in Embodiment A1, or symmetrically in a plurality of pairs of regions. Moreover, the above-described effect of improving the polarization conversion gain can also be attained when the diffraction directions are not set as described above.

Embodiment A4

The following is an explanation of a phase-retardation plate, a polarized illumination system using this phase-retardation plate, and a method for manufacturing the phase-retardation plate. With this phase-retardation plate, it is easy to configure a polarized illumination system with high polarization conversion efficiency, in particular when the patterns of the P-wave and S-wave light beams that have been polarization separated with the diffractive optical elements have a plurality of shapes.

The phase-retardation plate is used for polarization conversion, changing the polarization of either the polarization separated S-wave light beams or P-wave light beams by 90° to obtain S-wave or P-wave light beams with aligned polarization. Here, when performing polarization separation with diffractive optical elements as in the previous embodiments, the phase-retardation plate is provided at discrete regions on a predetermined plane on which the transmitted light and the diffracted light from the diffractive optical elements is incident. But if the patterns of the regions on which the transmitted light or the diffracted light is incident do not match the patterns of the regions where the phase-retardation plate is provided, then it can occur that light beams whose polarization direction should be converted do not enter the phase-retardation plate or light beams whose polarization direction should not be converted do enter the phase-retardation plate, so that the light beams are not aligned to a single polarization plane and the polarization efficiency is reduced.

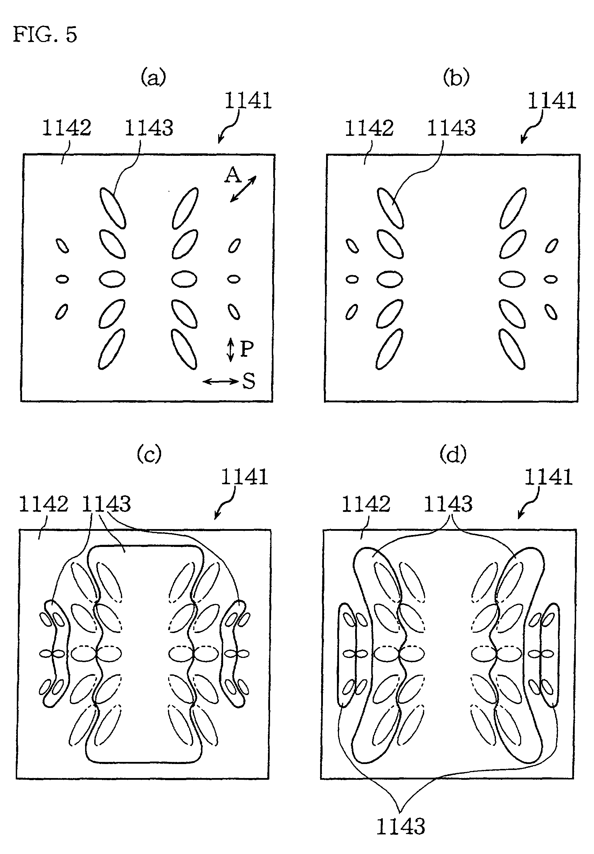

Therefore, as shown in Fig. 5(a), in the phase-retardation plate 1141 of the present embodiment, the polarization conversion portions 1143 are formed only at those regions where the transmitted light (or the diffracted light) from the diffractive optical elements enters the glass substrate 1142. These polarization conversion portions 1143 are provided with a retardation $\Delta n$, and are made of liquid crystal molecules aligned in the direction indicated by the arrow A. Moreover, when $\lambda$ is the wavelength of the light beam to be polarization converted, the thickness d of the polarization conversion portions 1143 is set such that the difference between d and $\Delta n \cdot d / \lambda$ is $\lambda / 2$. Thus, when light beams having a polarization plane in the direction indicated by P or S in Fig. 5 (that is, a direction at an angle of 45° to the arrow A) enter the polarization conversion portions 1143, they are converted to light beams with the other polarization plane, respectively.

By using such a phase-retardation plate 1141 as the phase-retardation plate 1107 in the polarized illumination systems of the above-described embodiments, a high polarization conversion efficiency can be attained. More specifically, when such a phase-retardation plate 1141 was applied to a polarized illumination system in accordance with Embodiment A1 (see Fig. 1), and the polarization conversion gain was measured with the method described in Embodiment A3, a high polarization conversion gain of about 1.4 to 1.7 was attained.

When applying the phase-retardation plate 1141 to various polarized illumination systems, the patterns of the regions where the polarization conversion portions 1143 are formed should be set in accordance with the patterns of the transmitted light beams or the diffracted light beams that are focused by the integrator and incident from the diffractive optical elements. More specifically, when converting S-waves (the transmitted light beams from the diffractive optical element 1135) into P-waves in the polarized illumination system of Embodiment A3 for example, the polarization conversion portions 1143 should be provided with the pattern shown in Fig. 5(a) for example, but when converting P-waves (the diffracted light beams from the diffractive optical element 1135) into S-waves, the polarization conversion portions 1143 should be provided with the pattern shown in Fig. 5(b), corresponding to the inverted pattern in Fig. 5(a). Furthermore, the patterns do not necessarily have to match the patterns of the light beams, and it is also possible to form the polarization conversion portions 1143 in patterns including the pattern of the light beams, as shown in Fig. 5(c) and Fig. 5(d).

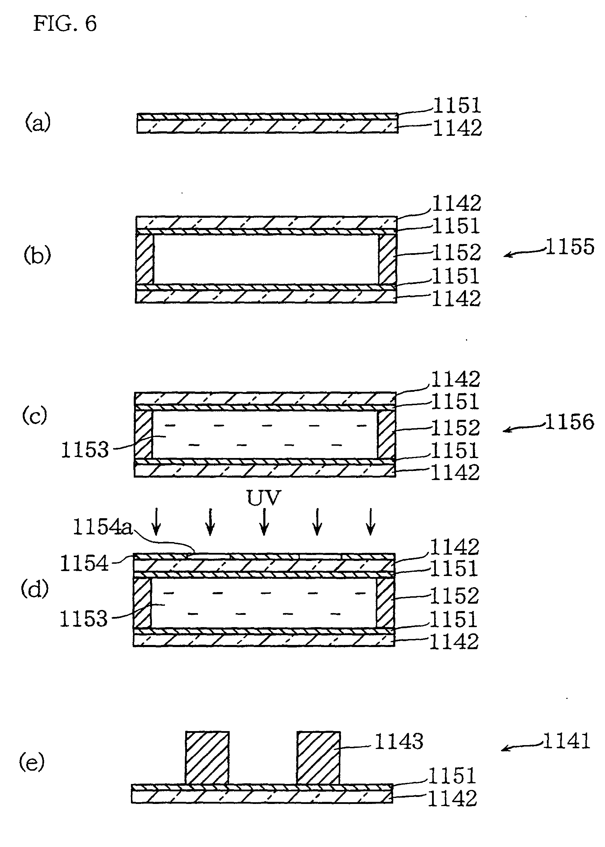

Referring to Fig. 6, the following is an explanation of a method for manufacturing such a phase-retardation plate 1141 using a UV-curing liquid crystal.

(1) First, as shown in Fig. 6(a), two glass substrates 1142 are rinsed and freed of dust, and then, an alignment film material of polyimide or the like is applied for example by spin-coating, and an alignment film 1151 is formed by heating.

(2) Then, the alignment film 1151 is subjected to a rubbing process in a predetermined direction with a roller or the like. In this rubbing process, the glass substrates are subjected to anti-parallel rubbing (that is, rubbing is performed along the same axis, but in opposite directions).

(3) Then, beads (not shown in the drawings) are distributed over the glass substrate 1142 to maintain the cell gap as shown in Fig. 6(b), and after applying a sealant 1152 to the periphery, the glass substrates 1142 are laminated together, thus forming a cell 1155.

(4) As shown in Fig. 6(c), a UV-curing liquid crystal 1153 is injected into the cell 1155 in air or in a vacuum, forming a liquid crystal cell 1156.

(5) As shown in Fig. 6(d), a photomask 1154 provided with aperture portions 1154a in one of the patterns shown in Fig. 5 for example is placed on the liquid crystal cell 1156, and UV light of ca. 300nm to 400nm wavelength is irradiated at substantially uniform light intensity with a laser or a mercury lamp. Thus, the liquid crystal 1153 is cured at only the portions corresponding to the aperture portions 1154a in the photomask 1154.

It should be noted that instead of placing the photomask 1154 directly on the liquid crystal cell 1156, it is also possible to cast the image of a predetermined pattern on the glass substrate 1142 with a lens system.

(6) As shown in Fig. 6(e), one of the glass substrates 1142 is stripped off, and rinsing with alcohol or acetone, the liquid crystal 1153 that has not been exposed and cured is removed. Thus, a phase-retardation plate 1141 is obtained, in which polarization conversion portions 1143 are formed in a predetermined pattern on the glass substrate 1142. To facilitate the stripping off of only one of the glass substrates, different alignment film materials should be used for the two glass substrates 1142.

The method for manufacturing the phase-retardation plate 1141 is not limited to this method, and it is also possible to remove the portions where the polarization conversion portions 1143 are not supposed to be formed by first curing the entire liquid crystal 1153 by irradiation of UV light that is uniform across the entire liquid crystal cell 1156, then stripping one of the glass substrates 1142, placing a negatively patterned mask on the cured liquid crystal 1153, and dry etching with a fluorine-based gas or the like.

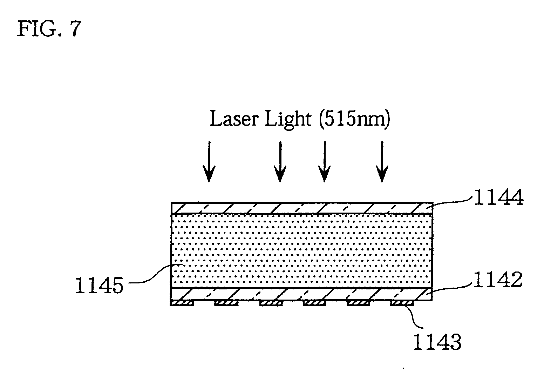

Moreover, instead of an individual substrate for the phase-retardation plate, it is also possible to use the glass substrate of the diffractive optical element. That is so say, as shown in Fig. 7, it is also possible to form the polarization conversion portions 1143 in the above-described manner on the glass substrate 1142 or to pattern the polarization conversion portions 1143 by laminating or forming a homogenous phase-retardation film on the glass substrate 1142 and etching it with a mask, and then form the diffractive optical element as shown for example in Embodiment B1 (explained below), by arranging an optical medium 1145 between the glass substrate 1142 and the opposing glass substrate 1144 and exposing it with interference light from the side of the glass substrate 1144.

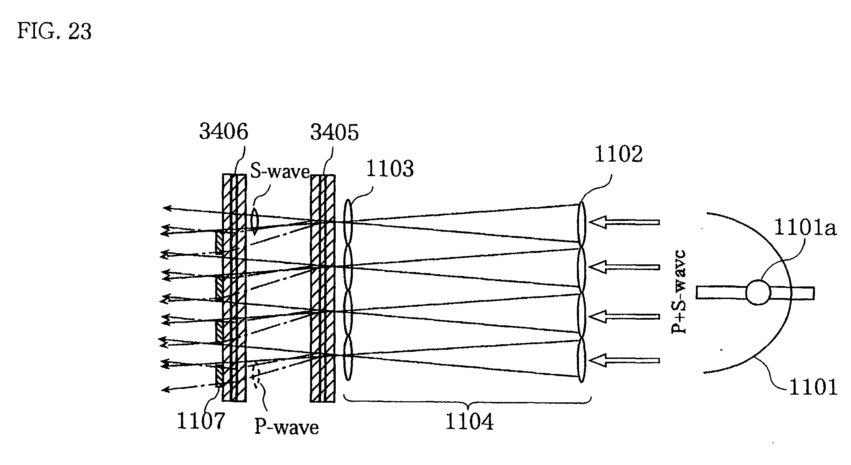

When making polarized illumination systems having the polarization conversion elements of Embodiment A3 (see Fig. 4) or Embodiment C3 (see Fig. 23) explained below, using a diffractive optical element made in this manner, and measuring the light efficiency, it was found that the usage efficiency of light waves with aligned polarization planes was improved by about 1.2. to 1.6 compared to devices in which no polarization conversion element is used, showing the advantageous effect for polarized illumination systems.

With this method, it is possible to make a phase-retardation plate with detailed periodic structure with high precision. Furthermore, it can also be used to make a detailed integrator 1104 without changing considerably the method for manufacturing the diffractive optical element or the configuration of the polarization conversion element. This method is promising in that can track future technological developments.

Embodiment B1

In the previous embodiments, several diffractive optical elements as known in the art were used for the diffractive optical element 1105 etc., but it is possible to improve the light efficiency even further by using a diffractive optical element as described below.

First, a diffractive optical element is explained, that is provided with a periodic structure of a refractive index distribution parallel to the surface of the diffractive optical element.

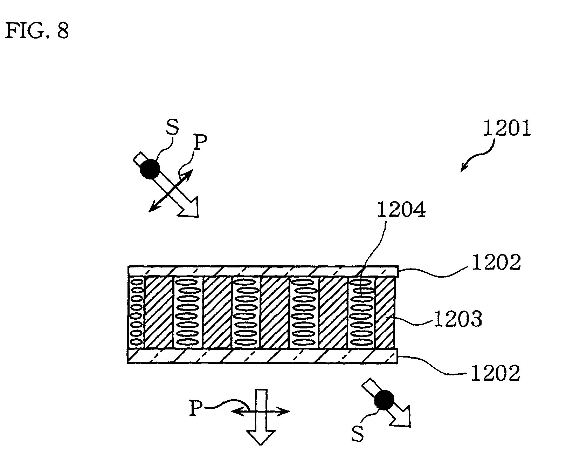

As shown in Fig. 8, this diffractive optical element 1201 includes polymer columns 1203 (polymer walls) arranged at a pitch of approximately 1μm between a pair of transparent insulating glass substrates 1202 arranged at a spacing of for example 10μm, and a liquid crystal 1204 made of liquid crystal molecules aligned in a direction that is perpendicular to the walls of the polymer columns 1203. For the polymer columns 1203, a cured mixture of monomers or oligomers can be used, for example. Furthermore, for the liquid crystal 1204, a nematic liquid crystal can be used, for example.

The refractive index of such a polymer is usually about 1.5, which is substantially the same as the ordinary refractive index No of commonly used nematic liquid crystals. Therefore, the refractive index of the liquid crystal 1204 with respect to incident light beams of ordinary light (corresponds to the S-wave in Fig. 8) is No, and also the refractive index of the polymer columns 1203 is about No, so that the diffractive optical element 1201 behaves like an isotropic medium and transmits incident ordinary light rays unchanged.

On the other hand, because the liquid crystal molecules are arranged perpendicularly with respect to the walls of the polymer columns 1203, the refractive index of the liquid crystal 1204 for extraordinary incident light beams (corresponding to the P-wave in Fig. 8) is Ne. By contrast, the polymer columns 1203 have no refractive index anisotropy, so that their refractive index stays at No. Consequently, the liquid crystal 1204 and the polymer columns 1203 form a periodic structure of regions with different refractive indices. Thus, the incident extraordinary rays are diffracted into a specified direction in accordance with this periodic structure (refractive index distribution).

The liquid crystal 1204 is aligned in the above-described manner by a mechanism that will be explained below, and has a high diffraction efficiency and polarization selectivity. Consequently, it is possible to considerably improve the polarization conversion efficiency and the light efficiency by using this diffractive optical element 1201 for the diffractive optical element 1105 etc. in the previous embodiments.

The following is an explanation of a diffractive optical element provided with a periodic refractive index distribution in a direction perpendicular to the surface of the diffractive optical element (i.e. in thickness direction).

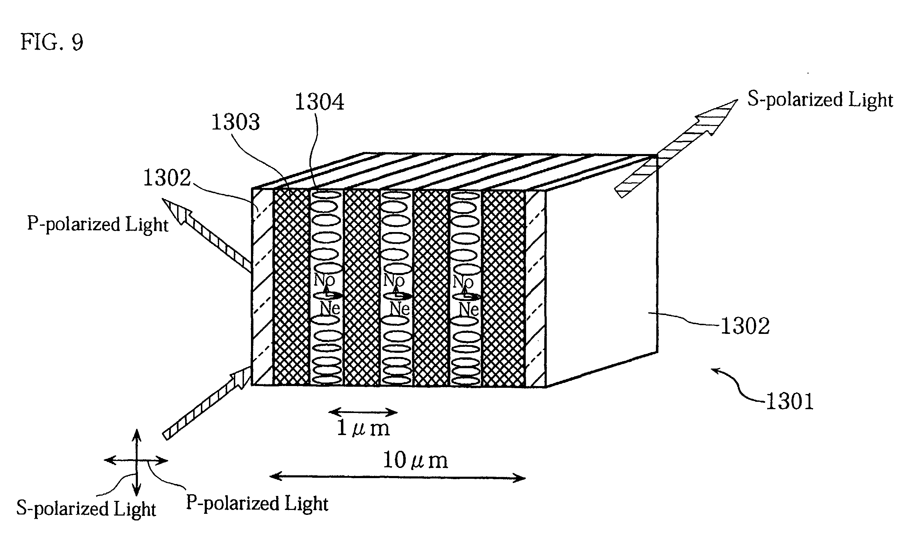

As shown in Fig. 9, this diffractive optical element 1301 includes polymer layers 1303 arranged at a pitch of approximately 1μm between a pair of transparent insulating glass substrates 1302 arranged in opposition at a spacing of for example 10μm, and liquid crystal layers 1304 made of liquid crystal molecules aligned in a direction that is perpendicular to these polymer layers 1303. For the polymer layers 1303 and the liquid crystal layers 1304, the same materials as in the above-described diffractive optical element 1201 can be used.

By providing such a periodic structure in the thickness direction, the Bragg diffraction condition applies. That is to say, when light with a certain wavelength is incident on the layers forming this periodic structure, the effect occurs that the scattered components of light that is scattered at the layers are reinforced in a certain direction that depends on the wavelength, the angle of incidence, and the pitch between the layers. This is called the Bragg condition, and turning a conventional two-dimensional diffractive optical element into a three-dimensional structure, it is used to attain a blazing effect (deviating light in a certain direction). Consequently, it can greatly improve the diffraction efficiency over conventional diffractive optical elements, and a theoretical efficiency of 100% can be attained. (The calculated result of this theoretical diffraction efficiency is taught in the analysis of H. Kogelnik (Bell Syst. Tech. J., 48, 1969, pp. 2909 - 2947).)

Also the diffractive optical element 1301 has a similarly high diffraction efficiency and polarization selectivity as the above-described diffractive optical element 1201. Consequently, it is possible to improve the polarization conversion efficiency and the light efficiency considerably by using the diffractive optical element 1301.

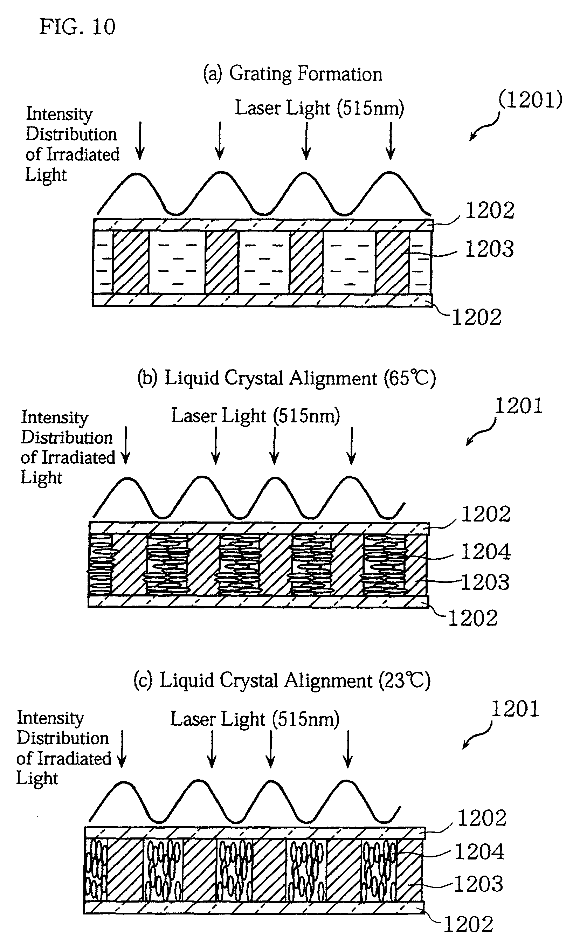

The following explains a method for making such a diffractive optical element, with reference to Fig. 10.

First, the glass substrates 1202 are rinsed and freed of dust, and then, an optical medium of liquid crystal mixed with a polymer precursor is dripped on one glass substrate 1202 with a spatula or the like, the other glass substrate 1202 is laminated on top of that, and the optical medium is sealed in the gap between the two glass substrates 1202, thus producing a liquid cell (sample).

For the optical medium, a nematic liquid crystal can be used, and for the polymer precursor, a mixture of monomers or oligomers can be used, for example. More specifically, it is possible to use phenylglycidil ether acrylate hexamethylene diisocyanate urethane prepolymer, 2-hydroxyethyl methacrylate, dimethylol tricyclodecane diacrylate or the like. The liquid crystal that was used in this embodiment (TL216 by Merck) has positive dielectric anisotropy, but it is also possible to use liquid crystal with negative dielectric anisotropy. Moreover, as the optical medium having refractive index anisotropy, it is possible to use uniaxial electrooptical crystals such as lithium niobate, $KD_2PO_4$, $\beta$-$BaB_2O_4$, or PLZT, or media including biaxial optical crystals such as $KTiPO_4$ and having refractive index anisotropy. Moreover, it is also possible to add n-phenylglycine as a photopolymerization initiator, or dibromofluoresceine or the like as a pigment for absorbing laser light with a wavelength near 515nm. Moreover, in order to maintain a uniform cell gap, it is also possible to add beads of several μm to several dozen μm diameter.

The liquid crystal formed in this manner is then exposed with laser light, using interference fringes. For the laser light, it is possible to use light of about 515nm emitted from an Ar laser, for example. After this light has been widened to a beam of 30mm to 50mm diameter or 30mm to 100mm diameter with a beam expander, it is divided into two light beams with a beam splitter, and guided over a predetermined path by a combination of mirrors, forming interference fringes with a pitch of, for example, about 1μm irradiated on the liquid crystal cell. The irradiated light intensity with this Ar laser is set to, for example, about 50mW to 100mW.

The pitch "p" of the interference fringes formed on the liquid crystal cell depends on the intersection angle θ of the two laser beams incident after passing through the mirrors, and the wavelength λ of the laser light:

$$(\text{Equation 1}) \qquad p = \lambda / 2\sin\theta$$

This means, the pitch of the interference fringes formed on the liquid crystal cell becomes lower when the interference angle of the two light beams becomes larger, or when the wavelength of the laser light becomes shorter.

Moreover, the diffraction direction (diffraction angle) of the light beam incident on the resulting diffractive optical element can be adjusted with the setting angle of the liquid crystal cell during exposure. For example, if each of the two light beams is incident at an angle of 15°, symmetrically with respect to the normal on the glass substrates 1202 of the liquid crystal cell, which means that the interference angle (exposure angle) is 30°, then the pitch of the interference fringes according to Equation 1 is 1μm, and the direction of the grating (polymer columns 1203) is formed perpendicular to the glass substrate surface. If on the other hand, the liquid crystal cell is set at a tilt angle of 15°, then the grating pitch is the same at 1μm, but the grating is formed in a direction tilted 15° with respect to the normal on the glass substrate 1202. In that case, P-waves incident perpendicularly on the glass surface of the diffractive optical element 1105 are diffracted into a direction 30° to the left (that is, 30° in a direction opposite to the direction in which the liquid crystal cell is tilted) of the propagation direction. In this manner, the diffraction direction can be adjusted by adjusting the setting angle of the liquid crystal cell during the laser exposure. Moreover, as explained for Embodiment A1, when making a diffractive optical element for diffraction in directions that are symmetric with respect to a plane including the optical axis, depending on where the light beams are incident, the setting angle of the liquid crystal cell should be changed symmetrically and performed with two exposures. More specifically, first, either the left or the right half of the liquid crystal cell is covered with a mask, so that it is not irradiated with laser light, and exposure is performed with a setting angle of 15°. Then, the mask is positioned on the other half, the setting angle is changed to -15°, and the region that was not exposed at the first exposure is exposed. With this method, a diffractive optical element can be produced, in which the diffraction directions are symmetrical in the regions on the left and the right of the optical axis. The diffractive optical element produced in this manner is a single element whose diffraction direction differs depending on the position where the light beam is incident, so that a diffractive optical element with simple configuration and high uniformity can be obtained. Furthermore, by changing the tilting direction of the liquid crystal cell or changing the setting angles into large and small angles, it is possible to produce the various diffractive optical elements explained in Embodiments A1 and A3.

The liquid crystal cell is exposed for about 5min with the interference fringes of the laser light while keeping the liquid crystal cell at a predetermined temperature with a temperature control device including a Peltier element, for example. The predetermined temperature can be, for example, the temperature range of about 50°C to 70°C, but this aspect will be explained in more detail further below. The exposure time is adjusted with a shutter provided in the light path of the laser light. With such an exposure, the diffractive optical element 1201 can be formed in a process of roughly two stages.

This means, when the exposure begins (first stage), the curing of the polymer precursor begins at the bright sections with high light intensity of the interference fringes caused by the interference of the two laser beams. In this step, polymer columns 1203 are formed in a periodic arrangement, as shown in Fig. 10(a). At the same time, since the liquid crystal does not undergo a curing reaction due to the laser exposure, it is pushed out from the cured polymer regions, and accumulates in the dark regions where the light intensity is weak. This means, a phase separation into polymer and liquid crystal occurs, and a periodic density distribution of polymer and liquid crystal is created. In the portions where the density of the liquid crystal is high, the average value of the refractive index is higher than in the portions of the polymer columns 1203, so that a periodic refractive index distribution is created. The diffractive behavior of such a cell depends on the refractive index distribution. However, the liquid crystal is not aligned, so that it has no portions with refractive index anisotropy, and it seems that it is not polarization selective, transmitting or diffracting incident light beams depending on their polarization.

As the exposure proceeds (second stage), the liquid crystal molecules that have accumulated in the dark portions are uniformly aligned macroscopically in a direction that is perpendicular to the walls of the cured polymer columns 1203, as shown in Fig. 10(b). The cause for this is that in the entire element, a stress distribution occurs somewhat abruptly between the polymer layer and the liquid crystal layer, because the polymer columns are formed periodically in microscopic regions, whereas the liquid crystal is not cured. It seems that the alignment of the liquid crystal is determined by these physical factors. Thus, the cell is provided with a periodical structure, in which polymer columns 1203 and liquid crystal 1204 with refractive index anisotropy are alternated periodically, so that the cell is polarization selective and its diffractive behavior depends on the polarization components of the incident light beams (being strongly diffractive for incident P-waves), as described above.

It should be noted that in the two stages of this exposure process, the same effect is attained if during the exposure the intensity of the laser light is changed, or the amount of photopolymerization initiator or pigments is changed.

The diffractive optical element 1201 is completed by irradiating substantially uniform light for about 5min with a mercury lamp on the cell formed as described above, and curing the uncured portions of the precursor throughout the entire cell.

As mentioned above, the diffractive optical element produced in this manner has a high diffraction efficiency and polarization selectivity, but it seems that these are heavily influenced by the temperature at the time of exposure. The following describes how the diffraction efficiency depends on the exposure temperature.

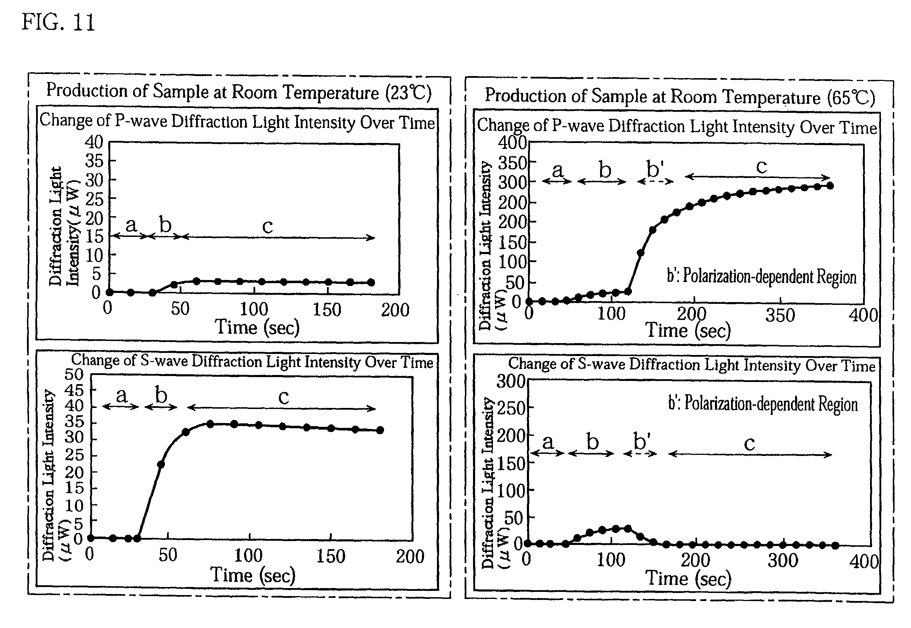

First, it is explained how the intensity of diffracted light with respect to polarized light changes as the exposure process proceeds, for an exposure performed at room temperature and an exposure at higher temperatures. In order to deduce the formation process of the internal grating structure of the diffractive optical element, the temporal change of the diffraction light intensity of incident P-wave and S-wave light (from a He-Ne laser) was examined for different temperatures during the laser exposure. (Here, this monitoring was performed by using, for the incident light, weak He-Ne laser light of 633nm wavelength, which is outside the absorption band of the liquid crystal sample, so that it does not affect the formation of the grating.) Fig. 11 shows the results that were obtained at room temperature and at a temperature of 65°C. In one case, the laser exposure was performed while keeping the test material and the glass substrate at room temperature, without heating the isothermal plate and the Peltier element. In the other case, a sample was assembled heating the test material and the glass substrate to 65°C, this sample was attached to a support that was adjusted to the same temperature with a Peltier element, and the sample was exposed with laser light. In both cases, the same test material (liquid crystal TL216) was used.

As a result, it was found that when the process temperature was room temperature, the diffraction light intensity when irradiating S-polarized light on the sample after the laser light exposure, was much larger than when irradiating P-polarized light. The temporal change of the monitoring light during the production can be broadly classified into three regions: a region *a* following the begin of the laser light exposure, in which no grating formation reaction occurs inside and in which the diffraction light intensity stays substantially the same, a region *b*, in which the diffraction light intensity increases over time, and a region *c,* in which the diffraction light intensity becomes saturated and stays substantially the same. These changes were the same for P-polarized light and for S-polarized light. This process resembles the formation by interference fringes with phase separation into liquid crystal and polymer as disclosed in R. L. Sutherland, L. V. Natarajan, and V. P. Tondiglia, Chem. Mater. Vol. 5, 1993, pp. 1533-1538, and there is no strong dependency on the polarization characteristics of the incident light wave.

On the other hand, when the process temperature was 65°C, the temporal change of the monitoring light intensity can be classified into four regions: a region a following the begin of the laser light exposure, in which no reaction occurs and in which the diffraction light intensity stays substantially the same, a region *b*, in which the diffraction light intensity increases over time, a region *b'* in which the rate of increase of the diffraction light intensity increases sharply, and a region *c*, in which the diffraction light intensity becomes saturated and stays substantially the same. In this case of a 65°C process temperature, the temporal change of the diffraction light intensity is very different depending on the polarization characteristics of the incident light wave. That is to say, P-waves and S-waves alike display similar changes in the regions "a" and "b", but they are very different in the region *b'*. The diffraction light intensity increases sharply for incident P-waves, whereas it decreases for S-waves. In this region, the change of the diffraction efficiency is very different depending on the polarization direction of the incident light, and it seems that this is because the reaction proceeds inside, increasing the birefringence.

As shown in the model of the formation process of the grating during the laser exposure in Fig. 10, the liquid crystal molecules align themselves with respect to the cured polymer columns, forming a grating, and it seems that as a result, a strong polarization dependency with respect to incident light develops. It thus became clear that the process temperature is an important parameter in achieving a polarization dependency as shown by the region *b'* in Fig. 11.

As shown in Fig. 11, the efficiencies P1' and S1' change drastically with the process temperature.

Near room temperature (23°C), the diffraction efficiency of S-waves is higher. On the other hand, at 65°C, the diffraction efficiency of P-waves increases and becomes larger than that of S-waves. The fact that the diffraction efficiency of S-waves is larger at room temperature can be explained by assuming that the liquid crystal molecules become parallel to the polymer columns. This is shown in Fig. 10(c). As the temperature increases, it appears that the liquid crystal molecules align perpendicularly with respect to the polymer columns, as shown in Fig. 10(b). It seems that the reason why the alignment direction of the liquid crystal changes with the process temperature is because the viscosity of the liquid crystal depends on the temperature, and when forming a periodic structure by curing a polymer as described above, a periodic stress distribution based on the volumetric shrinkage coefficient occurs, and the orientational changes of the liquid crystal molecules occur due to this physical behavior.

The following explains the relation between the N-I transition temperature of the liquid crystal, the process temperature, and the diffraction efficiency.

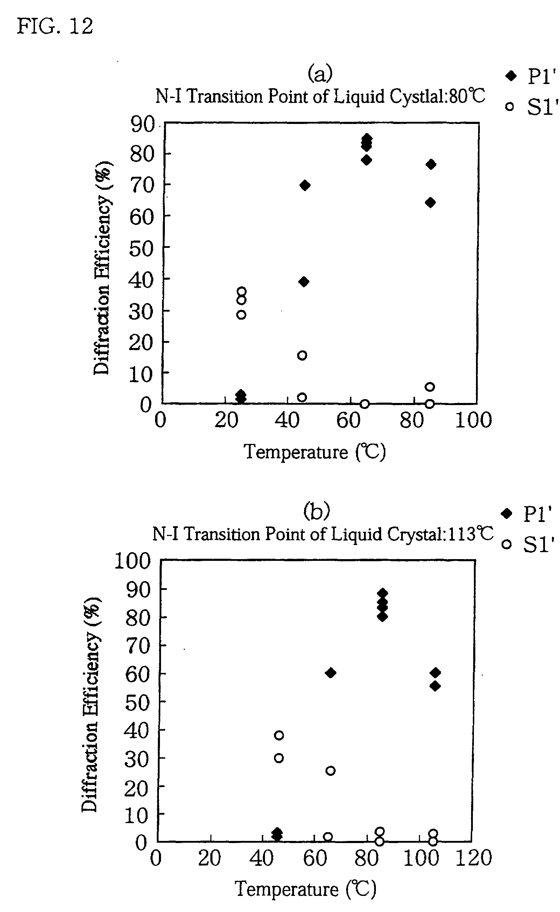

Several samples were prepared, varying the temperature at which the substrate was kept during the laser light exposure of the liquid crystal sample. For the liquid crystal material, a liquid crystal with an N-I transition temperature of 80°C and a liquid crystal with an N-I transition temperature of 113°C were used. Fig. 12 illustrates the evaluation results of substrate temperature during laser exposure and diffraction efficiency for the resulting diffractive optical elements. Here, the diffraction efficiency was evaluated using green laser light of 544nm wavelength, changing the polarization of the incident light with a polarizer. In Fig. 12, P1' illustrates the light intensity ratio of the light that does not simply pass through the element but is diffracted into a certain direction for incident P-waves. Similarly, S1' illustrates the same ratio for incident S-waves. The larger the ratio between the efficiencies P1' and S1' (that is, when one is close to 100% and the other one close to 0%), the larger is the ability to polarization separate incident light, and the better are the properties as a diffractive optical element for the present invention.

According to Fig. 12, the efficiencies P1' and S1' depend strongly on the process temperature, and at low temperatures of near room temperature (25°C) to ca. 40°C, the diffraction efficiency for S-waves is high. When the temperature is raised further, the diffraction efficiency for P-waves increases, and both (a) and (b) exhibit a peak near a certain temperature. The peak efficiency of P1' is at about 80% and is higher than that of S1'.

It seems that the diffraction characteristics for S-waves are large when the liquid crystal molecules are aligned in parallel to the polymer columns, that is, different than in Fig. 8. Apparently the alignment direction of the liquid crystal changes with the process temperature, because the viscosity of the liquid crystal changes with the temperature, altering the ratio of the liquid crystal molecules that shift in response to the stress distribution in the process of forming a periodic structure by curing the polymer as described above.

That is to say, as the temperature rises, the viscosity of the liquid crystal decreases, and the liquid crystal can shift more easily, so it appears that the orientation of the liquid crystal changes considerably until it is oriented substantially perpendicularly with respect to the polymer columns, as shown in Fig. 8. Moreover, it seems that the peak of the efficiency with respect to the temperature is due to the existence of a state in which physical forces resulting from stress and the viscosity of the liquid crystal are balanced, or, when the temperature is high, the liquid crystal molecules can move too easily, so that it becomes difficult to align them all in the same direction, thus reducing the efficiency.

Furthermore, in Fig. 12, it can be seen that the temperature at the peak of P1' is at about 65°C when the N-I transition point of the liquid crystal is 80°C (see Fig. 12(a)), and about 85°C when the N-I transition point of the liquid crystal is 113°C (see Fig. 12(b)). This shows that the process temperature at which the efficiency of the diffractive optical element peaks increases together with on the N-I transition point of the liquid crystal, making it very important to control the process temperature in accordance with the N-I transition point of the liquid crystal.

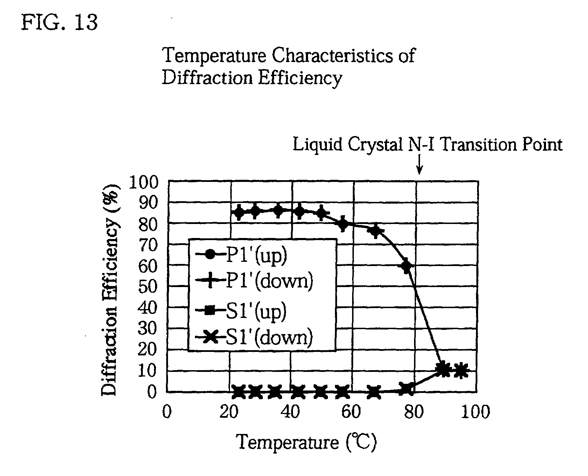

Fig. 13 shows how the diffraction efficiency depends on the temperature after the production of the diffractive optical element. As shown in Fig. 13, changes in the diffraction efficiency in response to temperature changes are reversible, there is no hysteresis, and a high diffraction efficiency and polarization selectivity can be maintained over a temperature range of ca. 20 to 70°C.

The following is an explanation of the relation between the diffraction efficiency, the incidence angle of the light beams, and the contrast.

The diffraction and transmission characteristics of a diffractive optical element prepared as described above were determined with green light (of 544nm wavelength from a He-Ne laser). When irradiating P-polarized light, the diffraction characteristics were extremely good, with a maximum diffraction efficiency of ca. 90%, and a transmission component that was less than 1%. When irradiating S-polarized light, the transmission characteristics were extremely good, with a diffraction ratio of less than 0.1% and a transmittivity of ca. 95% (other light components were lost for example by reflections at the substrate surface). Thus, it was confirmed that the resulting diffractive optical element had good polarization separation properties and a high diffraction efficiency.

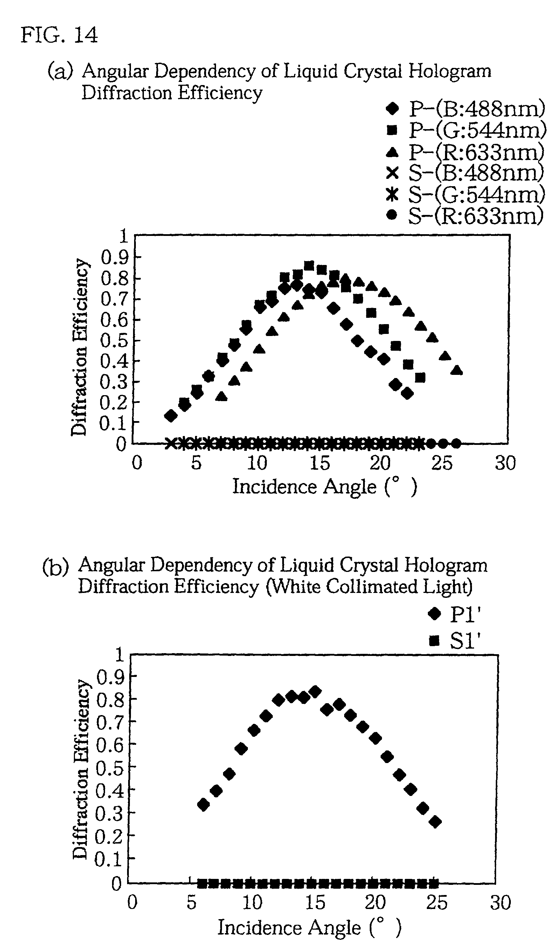

Fig. 14(a) shows the results of a measurement of the dependency of the diffraction efficiencies (P1', S1') on the incidence angle, for red, green and blue wavelengths. The peak for green light is near 15°, which corresponds to the exposure angle of the laser exposure. The peak for blue light is at 13°, and the peak for red light is at 17°, above and below the peak for green light. Furthermore, for green light, the P1' efficiency is 80% or higher over a incidence angle range of 15° ± 2.5°.

On the other hand, regarding the S1' efficiency, it can be seen that at all incidence angles there is hardly any diffraction for red, green and blue light, which is instead transmitted.

Furthermore, near an incidence angle of 15°, the intensity ratio of P1' to S1' was 500:1.

Fig. 14(b) shows the results for the efficiencies of the same samples as above, using a light source of white parallel light. The measurement was performed using for the white light source a cold cathode lamp whose light was collimated to about φ = 10mm with a beam expander, and was incident on an exposure region of a hologram sample. The efficiencies were evaluated in the same manner as above, using a laser. A photometer was used as the detector. Incident S-polarized light was transmitted without chromatic separation, but with growing distance the P-polarized light emitted from the sample was chromatically separated into red, blue and green, in accordance with diffractive behavior. Therefore, the intensity was detected at a region where the red, green and blue light was substantially overlapping.

The graph shown in Fig. 14(b) has a smooth peak near an incidence angle of 15°, and the P1' efficiency is about 80% over a incidence angle range of 15° ± 2.5°. On the other hand, it can be seen that there is substantially no diffraction for S1'. Thus, it was found that also for white parallel light, a high P1' efficiency of at least 80% and good polarization separation characteristics are attained.

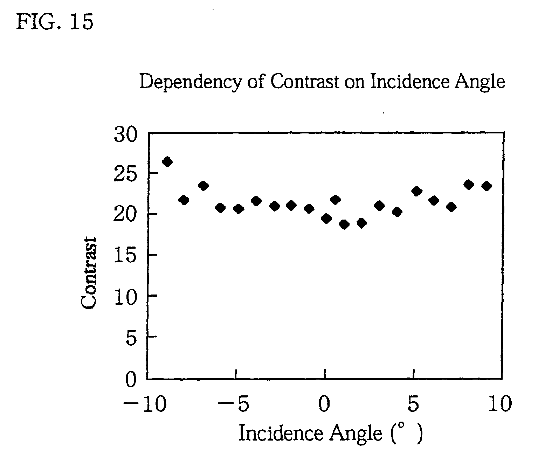

Furthermore, as shown in Fig. 15, it can be seen that the ratio of P1'/ S1', that is, the contrast, is maintained at a substantially constant value, regardless of the incidence angle.

For illustrative reasons, the foregoing examples have been explained for periodic structures in directions parallel to the substrate surface, but providing the thickness direction of the liquid crystal cell with a intensity distribution of the laser light, it is similarly possible to produce a diffractive optical element 1301 with a layering structure as shown in Fig. 9, and to attain similar characteristics.

Embodiment B2

The following is an explanation of another example of a diffractive optical element provided with a periodic structure of a refractive index distribution in a direction perpendicular to the surface of the diffractive optical element (thickness direction), and a method for manufacturing the same.

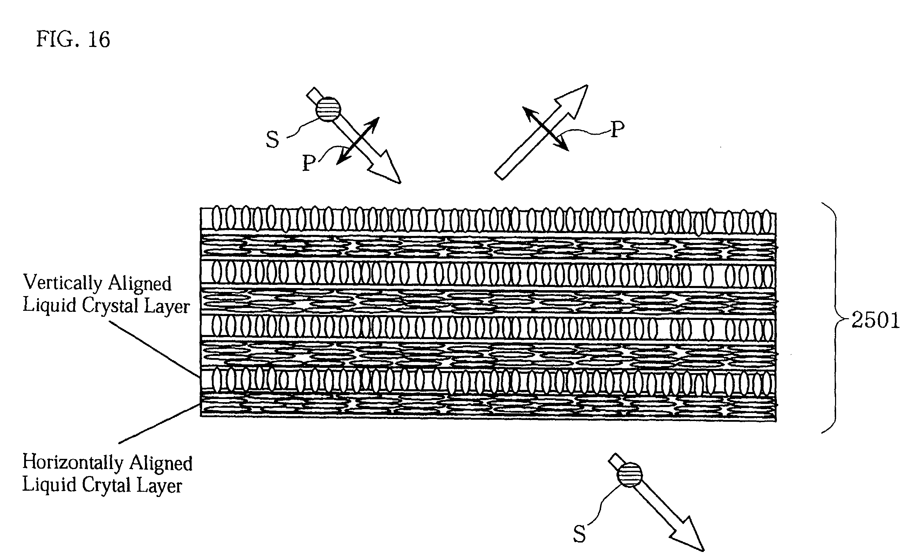

Fig. 16 is a cross-sectional view of the internal configuration of a diffractive optical element 2501. The diffractive optical element 2501 is made of an optical medium having an anisotropic refractive index.

This element has a layered structure that is periodic in thickness direction with respect to a surface to which light is incident. In one type of the adjacent layers, the optical axis of the optical medium, which has an anisotropic refractive index, is arranged parallel to the surface of the diffractive optical element 2501, and in the other type of layers, it is arranged perpendicularly to the surface.

Let us consider what happens when light enters an optical medium with anisotropic refractive index. When light whose polarization direction is parallel to the optical axis of the optical medium enters the optical medium, then that light is extraordinary light, so that the refractive index for that light is Ne. For ordinary light, whose polarization direction is perpendicular to the optical axis of the optical medium, the refractive index is No. Here, Ne is larger than No.

**[0160]** Next, let us consider what happens when ordinary light (S-wave) with a polarization that is perpendicular to the paper plane and extraordinary light (P-wave) with a polarization that is parallel to the paper plane enters the diffractive optical element 2501 in Fig. 16.

First, in the case of ordinary light, the polarization is perpendicular to the optical axis of the optical medium in each of the layers. Therefore, the refractive index is No for all layers, regardless of the direction of the optical axis in the layers. This is equivalent to a medium with a uniform refractive index of No, so that incident ordinary light is not subjected to diffraction but straightforwardly transmitted, as shown in Fig. 16.

Now let us consider the case of incident extraordinary light. In layers, in which the optical axis of the optical medium with anisotropic refractive index is parallel to the incidence plane, the polarization of the incident light is parallel to the optical axis. Thus, this corresponds to the case of light passing through a layer with a refractive index Ne. For layers in which the optical axis of the optical medium is perpendicular to the incidence plane of the diffractive optical element 2501, the polarization is perpendicular to the optical axis, so that these layers behave like layers with a refractive index No. Therefore, extraordinary light that is incident on the diffractive optical element 2501 passes through a plurality of layers with periodically differing refractive indices in the thickness direction, which is the propagation direction of the incident light. As a result, incident light rays are subjected to a so-called Bragg diffraction, in which light is collected in a certain direction that depends on the periodic pitch of the layers. As shown in Fig. 16, extraordinary light is reflected by the layering structure formed inside the diffractive optical element 2501, and its light path is diverted toward the upper right in the paper plane.

Consequently, also with a diffractive optical element 2501 configured like this, it is possible to attain high diffraction efficiency and polarization selectivity, as with the diffractive optical element of Embodiment B1.

Such a diffractive optical element 2501 can be made by layering the periodic structure by spin-coating a UV-curing liquid crystal, for example.

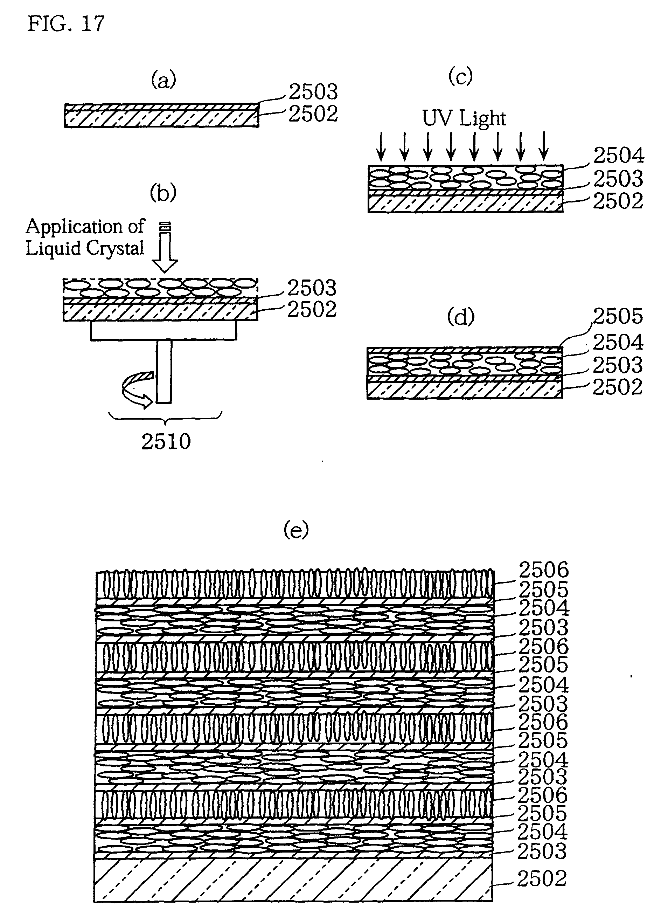

First, as shown in Fig. 17(a), an alignment film made of a polymer, such as polyimide, was applied by spin-coating on a glass substrate 2502, that has been rinsed and freed of dust, and a horizontal alignment film 2503 was formed in a heating process. Then, this horizontal alignment film 2503 was rubbed in a predetermined direction with a roller or the like.

Next, this glass substrate 2502 was placed on a spinner 2510, as shown in Fig. 17(b), and a UV-curing liquid crystal including for example a photopolymerizing liquid crystal monomer or a photocrosslinking liquid crystal polymer was applied by spin-coating. The film thickness was ca. 1000 to 10000Å. Then, UV light was irradiated on this film as shown in Fig. 17(c), and the liquid crystal molecules were cured in an orientation parallel to the substrate, thus forming a horizontally aligned liquid crystal layer 2504. This curing process was performed in an atmosphere of an inert gas, such as nitrogen, so that it is not obstructed by the oxygen in air.

After that, a vertical alignment film 2505 for arranging the liquid crystal molecules vertically with respect to the substrate was formed on top of the cured liquid crystal, as shown in Fig. 17(d).

Then, the glass substrate 2502 was again placed on a spinner 2510 as in Fig. 17(b), and a UV-curing liquid crystal was applied and cured in the same manner to form a vertically aligned liquid crystal layer 2506. Before continuous layer formation, only one horizontally aligned layer and one vertically aligned layer each were formed on a separate glass substrate, and placing this sample under a cross nicol polarizer, it was confirmed with a microscope that the UV-curing liquid crystal was aligned horizontally or vertically.

Repeating these steps, a multilayer structure as shown in Fig. 17(e) was formed, in which liquid crystal molecules that are horizontally oriented with respect to the substrate are arranged in alternation with liquid crystal molecules that are vertically oriented with respect to the substrate. With this process, a diffractive optical element like the one shown in Fig. 16 was obtained.

When green laser light of 544nm wavelength was irradiated on a diffractive optical element 2501 produced as described above and the diffraction efficiency was evaluated for varying angle of incidence, it was found that S-waves were substantially transmitted, whereas only P-wave components were reflected, and a multilayer structure was formed with different alignment directions of the liquid crystal molecules. Furthermore, although P1' decreased when changing the incidence angles of the light beams, S1' did not increase, and the contrast was independent on the angle of incidence.

Embodiment B3

The following is an explanation of yet another example of a diffractive optical element provided with a periodic structure of a refractive index distribution in a direction perpendicular to the surface of the diffractive optical element (thickness direction), and a method for manufacturing the same.

When layering a UV-curing liquid crystal by spin-coating as in the previous Embodiment B2, the liquid crystal molecules were not layered alternately in horizontal alignment and vertical alignment, but only in one orientation, namely in horizontal alignment. The application of the first liquid crystal layer was performed as in Embodiment B2.

For the liquid crystal of the second layer, a liquid crystal was used, whose ordinary refractive index was the same at approximately 1.5, whereas the extraordinary refractive index was about 0.1 larger. More specifically, a liquid crystal with No: 1.48, Ne: 1.55 was used for the first layer, whereas a liquid crystal with No: 1.48, Ne: 1.65 was used for the second layer.

Because the alignment directions of the liquid crystal in the first layer and the second layer are the same, only one kind of alignment film suffices, and the periodic structure can be much simpler than when different alignments are used in alternation. Moreover, aligning the liquid crystal that has been applied on the first rubbed alignment film also imparts some alignment to the second and further layers, so that there is also the possibility of omitting the formation of alignment films before applying the next liquid crystal, thus yielding an accurate manufacturing method that is simpler than that of Embodiment B2.

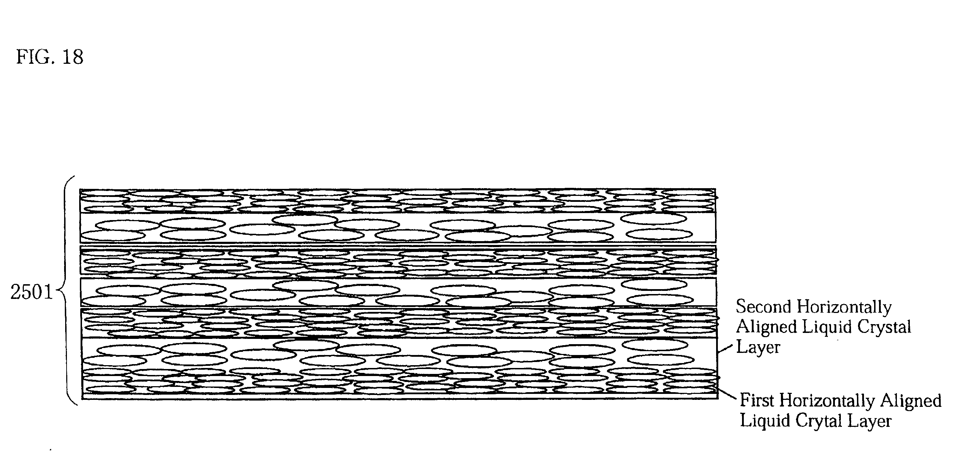

Fig. 18 is a schematic diagram of a diffractive optical element 2501 obtained with the above steps. The liquid crystal of the first layer and the liquid crystal of the second layer are aligned in the same direction, and have different extraordinary refractive indices. Let us consider the case that a light wave as shown in Fig. 16 enters this element. For an incident S-wave, the liquid crystal of the first layer and the liquid crystal of the second layer have the same ordinary refractive index of 1.48, so that the element can be regarded as an isotropic medium, through which the S-wave is transmitted straightforwardly, without being subjected to diffraction.

For an incident P-wave, the extraordinary refractive index of the first layer is 1.55, and the extraordinary refractive index of the second layer is 1.65, giving a refractive index difference of 0.1. Therefore, P-waves are diffracted by the periodic structure of alternate layers of liquid crystal, and emitted in a direction reflected at the substrate, as in Fig. 16.

The diffraction efficiency of this diffractive optical element was evaluated in the same manner as in Embodiment B2. As a result, it showed the characteristics that S-waves are transmitted and P-waves are reflected. Furthermore, regarding the dependency on the angle of incidence, it was found that S-waves decreased as the angle of incidence changed, and the contrast was substantially independent from the angle of incidence.

Embodiment B4

The following is an explanation of a manufacturing method with which the diffraction efficiency can be improved even further in a diffractive optical element provided with a periodic structure of a refractive index distribution along a direction parallel to the surface of the diffractive optical element as shown in Embodiment B1 (Fig. 8). That is to say, in the manufacturing method of Embodiment 8, an alignment film made of a polymer is applied to a glass substrate, the alignment film is rubbed, and then it was attempted to form a periodic structure by laser irradiation. This process is explained in more detail in the following.

First, a glass substrate was provided, and after rinsing the glass substrate to free it from dust, an alignment film made of a polymer, such as polyimide, was applied by spin-coating and heated to form an alignment film on the substrate. Then, the alignment film was subjected to a rubbing process in a predetermined direction with a roller or the like. In this rubbing process, the pair of glass substrates shown in Fig. 8 was subjected to anti-parallel rubbing (that is, rubbing is performed along the same axis, but in opposite directions).

Using glass substrates 3101 that have been treated in this manner, a test material made of the same liquid crystal and polymer as in Embodiment B1 was dripped on one of the glass substrates, and a cell was assembled. beads were selected from a range of about 3µm to 10µm in diameter to adjust the cell thickness.

Furthermore, two types of cells were prepared: one, in which the periodic structure formed by laser exposure was parallel to the rubbing direction of the alignment film, and one, in which it was perpendicular to the rubbing direction of the alignment film.

The efficiency of the prepared samples was evaluated by irradiating P-wave and S-wave laser light, as in Embodiment B1. As a result, it was found that samples with a cell thickness of about 10µm had a high diffraction efficiency for P-waves and transmitted substantially all of the S-waves, and had substantially no dependency on the rubbing process direction of the glass substrates.

In samples with a cell thickness of about 5µm, the diffraction efficiency for P-waves and S-waves was dependent on the direction of the rubbing process.

When the direction of the rubbing process was perpendicular to the alignment direction of the liquid crystal molecules in Fig. 8 (that is, the direction vertical on the paper plane), then for P-waves, the transmittivity was larger than the diffraction efficiency, whereas for S-waves, the diffraction efficiency was larger than the transmittivity. Furthermore, if the rubbing process was performed in the same direction as the liquid crystal alignment in Fig. 8, then good optical characteristics were attained, at which at least 95% of the S-wave was transmitted, whereas the P-wave diffraction efficiency was higher than 90%.

When the cell thickness of the sample was about 3μm, the dependency of the P-wave and S-wave diffraction efficiencies on the rubbing process direction was larger than for 5μm beads. However, the diffraction efficiencies were maximally about 60%, and diffraction light in other directions increased.

Thus, it can be seen that the effect of the rubbing direction becomes larger as the cell thickness of the samples becomes smaller. It seems that this is so, because when the cell is thick, the rubbing exerts an alignment-regulating force on the substrate surface, and its effect on the liquid crystal molecules in the middle of the cell is small when the cell is thick.

On the other hand, it seems that when the cell thickness is small, the alignment-regulating force on the substrate surface becomes dominant, and exceeds such physical factors as the stress occurring during the formation of the periodic structure mentioned in Embodiment B1. When the cell thickness decreases to a value that is about equivalent to the pitch of the periodic structure, then the effect of the Bragg diffraction explained in Embodiment B1 is diminished, so that the diffraction efficiency decreases. It seems to be important to take this into consideration when designing the diffractive optical element. With this production example, for a periodic pitch of 1μm, a control by rubbing seems to be possible to a certain degree while maintaining a relatively high diffraction efficiency at a cell thickness of about 5μm.

This method is also advantageous when the pattern of the periodic structure is not a simple grating structure, but when forming a pattern having a certain shape, in order to make the alignment direction of the liquid crystal molecules independent from the grating shape, in order to set a desired polarization dependency for the incident light wave.

Embodiment B5

The following is an explanation of method for forming a diffractive optical element, in which exposure is performed using a photomask with a predetermined pattern, different from the formation of the microscopic periodic structure in μm—order by interference of two laser beams.

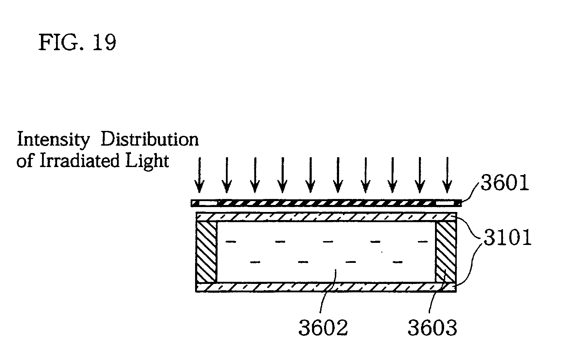

As shown in Fig. 19, the same optical medium 3602 as in Embodiment B1 is disposed in the region sandwiched a pair of glass substrates 3101.

One of these glass substrates is partially irradiated using a photomask 3601. For illustrative reasons, Fig. 19 shows a gap between the photomask 3601 and the glass substrate 3101, but needless to say, it is possible to place the photomask 3601 directly on the glass substrate, or a pattern can be imaged on the glass substrate with a lens system.

The following explains the process of irradiation using the photomask 3601. The photomask 3601 shown in Fig. 19 has apertures only at the periphery of the glass substrate and light passes only through this portion. When substantially uniform laser light or light from a mercury lamp or the like of less than about 515nm is irradiated onto this portion, the polymer below the glass substrate corresponding to this irradiated region begins to cure, and columns 3603 (walls) are formed on both sides (i.e. the perimeter).

Then, the photomask 3601 is removed, and an intensity distribution is irradiated corresponding to the interference fringes resulting from the interference of two laser beams as in Embodiment B1, forming a periodic structure in μm-order.

When light is irradiated with a photomask 3601 in such a step and the periphery of the glass substrate is cured, then only the peripheral portion is selectively sealed with a polymer layer. This process is equivalent to the steps of applying a new UV-curing resin or the like to the periphery of the prepared sample, and curing it with UV light. Consequently, the sealing properties of the element can be conserved, and the reliability in humid environments can be increased.

Furthermore, pre-forming polymer columns at the periphery also keeps the cell thickness uniform throughout the entire sample. Thus, the cell thickness is kept uniform over the entire substrate when subsequently making the microscopic periodic structure. Thus, the periodic structure is formed uniformly not only at the center but also at the periphery, and the diffraction efficiency is improved for the entire element.

Moreover, it is also conceivable to perform the exposure using a photomask with a pattern including a plurality of the patterns of the photomask 3601 at a pitch of, for example, approximately 1mm to several dozen mm. After performing the exposure with the photomask 3601, the microscopic periodic structure is formed, and samples are obtained as in Embodiment B1. The obtained diffractive optical element samples are cut into portions whose periphery has been sealed by the photomask 3601. Thus, it is possible to produce with one process a plurality of diffractive optical element samples of relatively small or microscopic size that have the same characteristics. That is to say, since the periphery is already sealed with a polymer layer, there is no risk of liquid crystal leaking out when cutting the glass, thus degrading the properties of the element. This method is effective when producing numerous diffractive optical element of relatively small or microscopic size, such as used for head-up displays, and it seems that it is also very advantageous for cutting production costs.

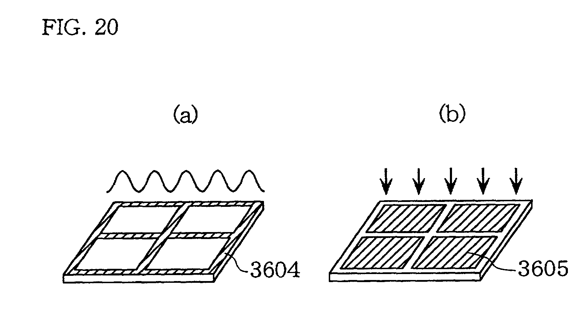

It is also possible to attain the same effect when first performing exposure with interference fringes using a photomask 3604 covering the portions to be turned into columns (walls) as shown in Fig. 20(a), and then forming the sealing portions using a photomask 3605 that is a negative of the photomask 3604, as shown in Fig. 20(b).

Embodiment C1

The following explains an example of an image display system including a polarized illumination system using a diffractive optical element as described in Embodiment B1 etc.

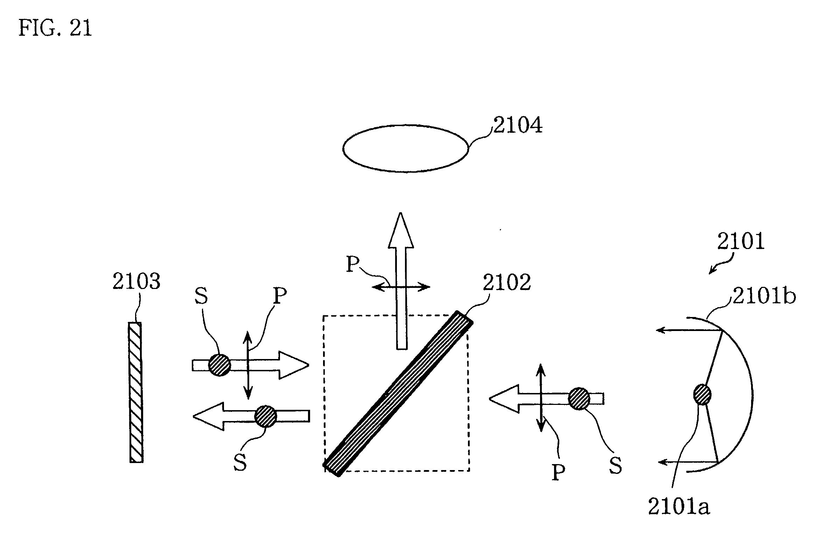

As shown in Fig. 21, the polarized illumination system is made of a light source 2101 and a diffractive optical element 2102. Moreover, the image display system is made of this polarized illumination system, a light valve 2103, and projection lens 2104.

The light source 2101 includes a light emitting portion 2101a, and a reflector 2101b collimating the light beam from the light emitting portion 2101a and emitting it as a substantially parallel light beam. For the light emitting portion 2101a, a fluorescent lamp, a xenon lamp, a metal halide lamp, a mercury lamp, an LED, an FED, laser light or an inorganic or organic electroluminescent element can be used, for example.

The diffractive optical element 2102 diffracts and eliminates those light beams emitted by the light source 2101 that are polarized in parallel to the paper plane of Fig. 21 (here referred to as P-waves), whereas it transmits the light beams that have a polarization perpendicular to the paper plane of Fig. 21 (here referred to as S-waves) and irradiates them towards the light valve 2103. The diffractive optical element 2102 also transmits the S-waves of the light beams reflected from the light valve 2103, and diffracts only the P-waves towards the projection lens 2104.

The light valve 2103 modulates the polarization of incident S-waves in accordance with an image signal, and reflects light beams, in which P-waves and S-waves are mixed. More precisely, at the pixels that correspond to a black display image, the polarization direction is not modulated, and the S-wave is simply reflected, whereas at the pixels for white or intermediate gradations, a light wave is reflected that includes P-wave components whose polarization has been modulated in accordance with an electric field applied to those pixels. That is to say, the light beams that are reflected by the light valve 2103 have different polarizations, depending on whether an electric field is applied to the pixels on which they are incident. For this light valve 2103, it is possible to use for example a twisted nematic liquid crystal display element, a homeotropic VA-mode liquid crystal element, or a ferroelectric or antiferroelectric liquid crystal, in which the orientation of the liquid crystal molecules depends on the polarity of the electric field, for example.

The projection lens 2104 magnifies those P-waves of the light beams reflected from the light valve 2103 that have been diffracted by the diffractive optical element 2102 as described above and projects them onto a screen not shown in the drawings.

Using for the diffractive optical element 2102 a diffractive optical element that has high polarization selectivity and diffraction efficiency as explained in Embodiment B1 etc., almost none of the P-waves from the light source 2101 and the S-waves from the light valve 2103 enter the light valve 2103 or the projection lens 2104, whereas almost all of the S-waves from the light source 2101 and the P-waves from the light valve 2103 enter the light valve 2103 or the projection lens 2104, so that a bright image display with high contrast is attained. Moreover, the diffraction efficiency depends only little on the angle of incidence, so that it is possible to use a projection lens 2104 with a small F-number, without causing a lower contrast.

That is to say, turning to the characteristics of the diffractive optical element (see Fig. 14 and Fig. 15) to explain in more detail the reasons why the diffractive optical element of Embodiment B1 is suitable for the image display system of this embodiment, S1' in Fig. 14 represents the components that the diffractive optical element diffracts without transmission, and the smaller this value is, the more suitable it is for a polarized illumination system. P1' represents the components that are diffracted by the diffractive optical element and used as reflected light by the projection lens 2104. This means, the ratio P1' / S1' corresponds to the contrast on the screen, and the larger this value is, the more preferable it is when used in a polarized illumination system. As shown in Fig. 15, this contrast is maintained at a substantially constant value over a range of at least $\pm 10°$. This is because regarding the diffraction light intensities of P1' and S1', the intensity of P1' drops when the incidence angle changes, whereas for S1' it does not rise when the incidence angle changes, but rather drops, and there is no offset effect for angular deviations. The above-mentioned incidence angles correspond to the deviations from the optical axis when using a lens of F = ca. 3.0. Thus, when applying such a diffractive optical element, the proportion of the S-waves in the components reflected from the light valve 2103 and entering into the projection lens 2104 is small, even for lenses with small F-numbers. Consequently, it is possible to provide a polarized illumination system with small contrast reductions. Moreover, in this image display system, the S-waves from the light source 2101 are incident on the light valve 2103. Since the transmitted S-waves are not diffracted to higher orders by the diffractive optical element and substantially all of the transmitted S-waves enter the light valve 2103, it is possible to attain a high light efficiency. As shown in Fig. 14, the P1' diffraction efficiency decreases as the angle of incidence becomes larger, and this leads to a lower brilliance of the white level, but it is possible to improve this by increasing the $\Delta n$ of the liquid crystal sample. The value of the $\Delta n$ of the liquid crystal used as the optical medium can be selected from a broad range, so that the P1' diffraction efficiency can be increased, and a diffractive optical element with a softer incidence angle dependency can apparently be manufactured with the same method, making it possible to provide an excellent polarized illumination system.

Embodiment C2

The following explains another example of an image display system including a polarized illumination system using a diffractive optical element as described in Embodiment B1 etc.

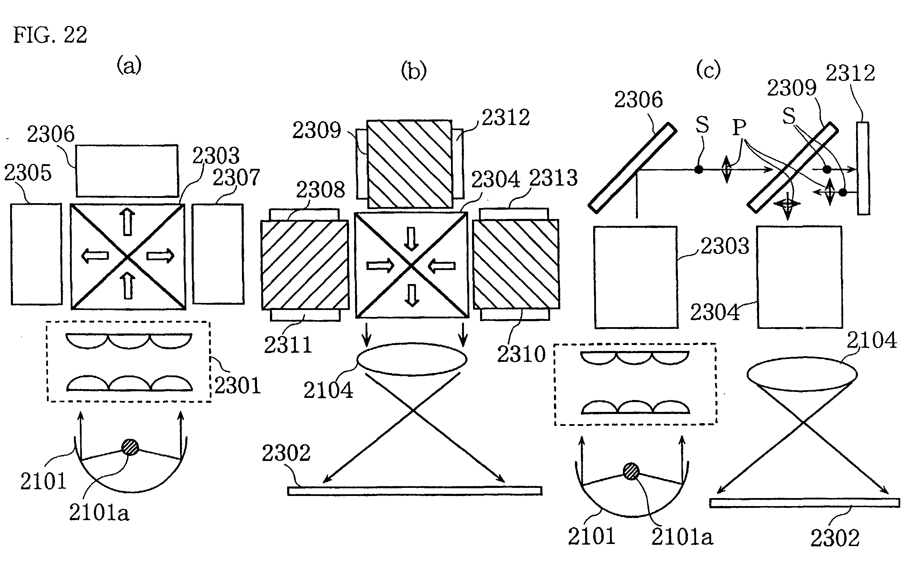

This image display system is a projection-type image display system capable of displaying color images that includes a color separation and a color combination system. The portion shown in Fig. 22(a) is a second-level color separation system, which separates the light from the light source 2101 according to wavelength into R (red), G (green) and B (blue) light. The portion shown in Fig. 22(b) is a color combination system arranged on the first level, which carries out the color combination, after the light of the various wavelengths, guided from the second-level color separation system, has been reflected by reflection-type light valves 2311 to 2313. In this projection-type display system, the second-level portion overlaps vertically with the first-level portion.

The following is a more detailed explanation of an image display system with this reflection system. A light beam emitted by the light source 2101 passes through an integrator 2301 made of a first lens group and a second lens group, and after the light intensity at the center of the light beam has been equalized with the light intensity at the periphery, the light beam enters a dichroic prism 2303.

This dichroic prism 2303 is made by forming wavelength filters for each wavelength band inside. Therefore, white light from the light source 2101 is separated according to its wavelength into the primary colors red, green and blue with these wavelength filters. Then, the separated red, green and blue light is emitted in the directions indicated by the arrows in Fig. 22(a), respectively. The dichroic prism 2303 has the same function as a dichroic mirror with three mirror planes, but since it is configured as a prism, colors can be separated without using up much space and a compact system is accomplished. But it is also possible to use a dichroic mirror with substantially the same configuration as the dichroic prism.

The light that is emitted in these three directions is reflected by the mirrors 2305 to 2307 and guided downward to the first level. Then, the three light beams enter the diffractive optical elements 2308 to 2310. The diffractive optical elements 2308 to 2310 simply transmit the S-polarized components, which then enter the reflection-type light valves 2311 to 2313. The light waves reflected by the reflection-type light valves 2311 to 2313 again enter the diffractive optical elements 2308 to 2310, and the P-wave components are reflected and enter the dichroic prism 2304.

The dichroic prism 2304 has a function that is opposite to that of the dichroic prism 2303, and combines the separately incident red, green and blue light beams and emits them as a light beam that travels in one direction (towards the projection lens 2104). The light passing through the projection lens 2104 is displayed as a magnified image on a screen 2302.

Also in this image display system, diffractive optical elements having high polarization selectivity and diffraction efficiency as explained in Embodiment B1 etc. are used for the diffractive optical elements 2308 to 2310, so that a bright image display with high contrast is attained. Here, light that is separated according to its wavelength into the colors red, green and blue by the dichroic prism 2303 enters the diffractive optical elements 2308 to 2310. Thus, if the pitch of the periodic structure of the refractive index distribution in the diffractive optical elements 2308 to 2310 is optimized according to the wavelength of the incident light, or in other words, if the pitch is made smaller as the wavelength becomes smaller (i.e. progressively smaller from red to green to blue), then the diffraction efficiency of the diffractive optical elements 2308 to 2310 can be increased even further.

Embodiment C3

The following is an explanation of an example of a polarized illumination system using a diffractive optical element as described in Embodiment B1 etc.

As shown in Fig. 23, instead of the diffractive optical elements 1105 and 1106 in the polarized illumination system of Embodiment 1, the polarized illumination system is provided with diffractive optical elements 3405 and 3406 diffracting all incident P-waves into the same direction. With this configuration, the diffraction angle depends on the wavelength of the incident light, so that non-uniform chromaticity and light intensity occur at the periphery of the light valve (not shown in the drawing) because the light paths shift for each color, but it is possible to attain a high polarization conversion efficiency by using a diffractive optical element having high polarization selectivity and diffraction efficiency as explained in Embodiment B1 etc. for the diffractive optical elements 3405 and 3406.

The shifting of the light paths for each color is compensated by overlapping the light beams from the lenses constituting the integrator 1104 in the larger part of the region including the center of the light valve, so that the non-uniform chromaticity and light intensity occur only at the periphery of the light valve, and their influence can be decreased by setting the distance between the diffractive optical elements 3405 and 3406 to a small distance.

Furthermore, usually the diffractive optical elements 3405 etc. have different diffraction efficiencies depending on the wavelength of the incident light, but this issue can be addressed by maintaining a high efficiency across a large region of the visible spectrum by appropriately selecting for example the Δn of the liquid crystal in the diffractive optical elements 3405 etc.

Embodiment C4

The following explains another example of a polarized illumination system using a diffractive optical element as described in Embodiment B1 etc.

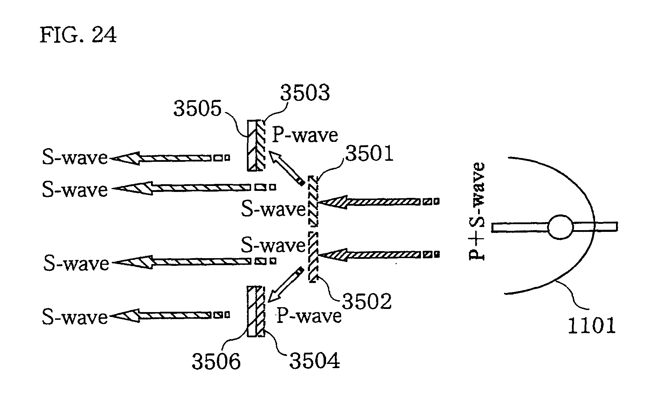

As shown in Fig. 24, this polarized illumination system includes a light source 1101, diffractive optical elements 3501 to 3504, and phase-retardation plates 3505 and 3506. When a light beam including a P-wave and an S-wave emitted by the light source 1101 enters the diffractive optical elements 3501 and 3502, the polarization separation ability of the diffractive optical elements 3501 and 3502 causes the S-waves to be transmitted, and the P-waves to be diffracted in directions that are symmetric with respect to the optical axis. The light beams diffracted by the diffractive optical elements 3501 and 3502 enter the diffractive optical elements 3503 and 3504, respectively. The diffractive optical elements 3503 and 3504 have the same diffraction characteristics as the diffractive optical elements 3501 and 3502 (but with opposite diffraction directions), respectively. Therefore, due to this diffractive behavior, the propagation direction of P-waves that are incident on them will be the same as the direction in which light is emitted from the light source 1101. The phase-retardation plates 3505 and 3506, which are λ/2 plates, convert the diffracted light emitted by the diffractive optical elements 3503 and 3504 and emit it as an S-wave. This means, all of the light emitted by the light source 1101 is turned into S-waves, and is emitted by the polarized illumination system as a light wave with aligned polarization direction.

In this polarized illumination system, diffractive optical elements having high polarization selectivity and diffraction efficiency as explained in Embodiment B1 etc. are used for the diffractive optical elements 3501 to 3504, making it easy to improve the polarization conversion efficiency. Moreover, in this configuration, the irradiation area is about twice as large as the light source 1101, but since it can be used in direct combination with the light source, the design freedom of the configuration for devices in which this polarized illumination system is used can be increased, so that a wide range of applications can be expected. Moreover, by using the diffractive optical elements 3501 to 3504 in this configuration, the diffraction direction of the light waves can be set as desired. This allows configurations that are thin with respect to the depth direction, if the diffraction angle is increased.

Embodiment D1

The following explains another example of an image display system using a diffractive optical element as described in Embodiment B1 etc.

First, its general outline is explained.

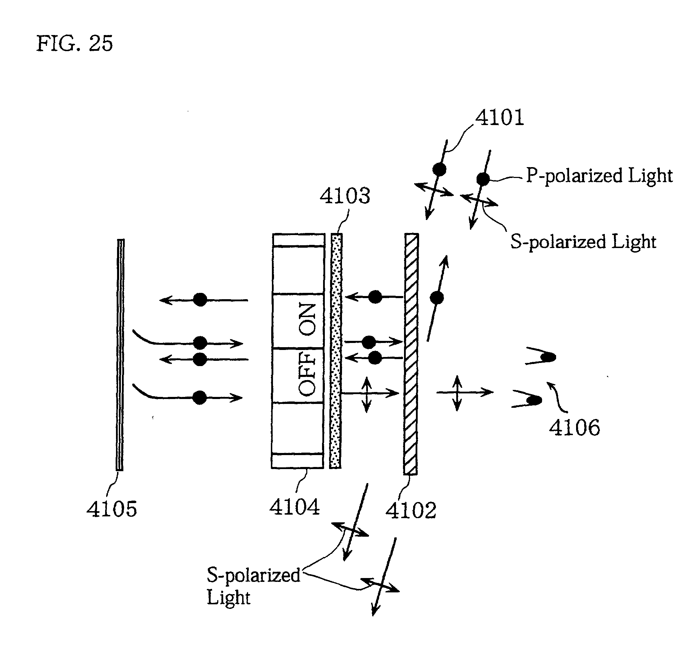

As shown in Fig. 25, external light 4101 consists of light waves that include P-polarized light and S-polarized light. Here, the components that are polarized in a direction parallel to the paper plane of Fig. 25 are taken as the S-polarized light, as indicated by the arrow in Fig. 25, and the components that are polarized in the direction perpendicular to the paper plane of Fig. 25 are taken as the P-polarized light, as indicated by the black dot in Fig. 25.

When external light 4101 including P- and S-polarized components is incident on the diffractive optical element 4102 obliquely from above, then, because of the refractive index anisotropy of the diffractive optical element 4102, the diffractive optical element 4102 transmits the S-polarized components and diffracts only the P-polarized components in a direction that is substantially perpendicular with respect to the surface. The diffracted P-polarized components pass through a phase-retardation film 4103, pass through the pixels of a polarization modulation element 4104, are reflected by a reflection plate 4105, and pass again through the polarization modulation element. The light waves that have been modulated such that their polarization plane of the light waves after passing the polarization modulation element twice are finally passed through the phase-retardation film to optimize their polarization plane.

Here, the polarization plane of the light waves that pass through ON pixels is not changed, the light waves enter the diffractive optical element 4102 as P-polarized light from the left in Fig. 25, and are diffracted upward in the drawing. On the other hand, the polarization plane of the light waves that pass through OFF pixels is rotated and those light waves enter the diffractive optical element 4102 as S-polarized light, so that they are not subjected to diffraction and proceed linearly until they reach an observer 4106.

Thus, the observer 4106 can perceive an image that is made up of a pattern of bright and dark, in correspondence to the pixels of the polarization modulation element 4104. Furthermore, the image observed by the observer is made of transmitted light that is not affected by the diffractive behavior of the diffractive optical element 4102. Therefore, it is not affected by the dependency of the diffraction angle on the incident wavelength, which is characteristic of the diffractive optical element. Consequently, it becomes possible to produce a clear image that is not affected by wavelength-dependent color shifts or the like resulting from changes in the diffraction direction with respect to white light, after transmission through the diffractive optical element 4102.

The following is a more detailed explanation.

When the external light 4101 enters the diffractive optical element 4102, the following effects occur. As mentioned above, the diffractive optical element 4102 is formed using an optical medium with anisotropic refractive index anisotropy and is about 10μm thick, so

that the refractive index has a periodic distribution in the thickness direction. Therefore, the diffractive behavior depends on the polarization direction, and the element has a diffraction efficiency that is particularly high for one direction.

The P-polarized light acts as the extraordinary light component in the diffractive optical element 4102, so that it is modulated by the refractive index distribution of the periodic structure formed inside the element, and bent in a direction perpendicular to the diffractive optical element, as shown in Fig. 25, from where it enters the phase-retardation film 4103.

On the other hand, the S-polarized light acts as the ordinary light component in the diffractive optical element 4102, so that it is not affected by the refractive index distribution of the periodic structure in the element, and shows the same characteristics as when passing through a medium with an isotropic uniform refractive index. Therefore, the S-polarized light simply passes through the diffractive optical element 4102. Consequently, after passing through the diffractive optical element 4102, only P-polarized light passes through the phase-retardation film 4103, and enters the polarization modulation element 4104.

In this embodiment, a twisted nematic liquid crystal, in which the orientation of the liquid crystal molecules at the ingoing plane is twisted with respect to the orientation at the outgoing plane, was used for the polarization modulation element 4104. Patterned transparent electrodes are formed on this element, and an electric field can be applied to each pixel. In pixels to which an electric field is applied that completely switches the liquid crystal (ON), the twisting of the liquid crystal molecules is undone, and the liquid crystal is turned into a state in which the liquid crystal molecules are isotropic with respect to the plane of incidence (homeotropic state). Therefore, the P-polarized light that enters those pixels is not modulated but passes through the liquid crystal element with its polarization unchanged, is reflected by the reflection plate 4105, passes again through the polarization modulation element, and is emitted as P-polarized light.

For this embodiment, a reflection plate 4105 made of metal or made of a dielectric multilayer film can be used. Here, a reflection plate 4105 formed by vapor deposition of A1 was used. It is also possible to control the viewing angle characteristics by providing the surface of the reflection plate with a microscopic undulation or a blazed saw-tooth shape.

In the pixels to which no electric field is applied (OFF), the orientation of the liquid crystal molecules is twisted in the thickness direction from the ingoing plane to the outgoing plane. Therefore, the P-polarized light that enters those pixels is reflected by the reflection plate 4105, and the polarization plane of the P-polarized light is rotated for approximately 90° by the twisted nematic effect due to the twisting of the liquid crystal as it passes twice through the diffractive optical element 4104. Consequently, after passing through the OFF pixels, the P-polarized light has been turned into and is emitted as an S-wave.

The phase-retardation film 4103 is used to optimize the polarization plane that has been modulated with the polarization modulation element 4104. For the phase-retardation plate 4103, a $\lambda/4$ plate changing the orientation of the polarization plane 90° as light passes through and back can be used. The polarization direction is aligned with the diffractive optical element 4102, but it is also possible to use a polarizer increasing the contrast properties by adjusting the polarization plane. In that case, the diffractive optical element 4102 also modulates the polarization plane, so that it is also possible to use a polarizer with a low degree of polarization. That is to say, using a polarizer with a low degree of polarization, the transmission properties are better than when using only a polarizer with a high degree of polarization, so that the light efficiency can be improved. Also, when a scatter plate is used for the phase-retardation film 4103, it is possible to attain a wider viewing angle after hologram emission.

Thus, it is possible to attain the desired display image characteristics by selecting or combining various types of films for the phase-retardation film 4103.

Thus, the polarization direction of the light after passing through the polarization modulation element depends on whether there is an electric field at the pixel through which the light has passed. When the light enters the diffractive optical element 4102, the diffractive optical element 4102 diffracts the P-polarized light that has passed through the ON pixels, bending its propagation direction upwards in Fig. 25. Furthermore, the S-polarized light that has passed through the OFF pixels is not subjected to modulation with the diffractive optical element 4102, and is travels on straightly.

Consequently, the polarization of the light that has passed the pixels of the liquid crystal element is modulated in accordance with the electric field applied to the pixels, and as a result, the propagation direction of the light passing through the diffractive optical element 4102 is different. For an observer 4106, the propagation direction of P-polarized light that has passed through the ON pixels is bent by diffraction, so that it leaves the visual field and cannot be perceived by the observer 4106. On the other hand, the S-polarized light that has passed through the OFF pixels travels straight through the diffractive optical element 4102, so that it enters the visual field of the observer 4106 and can be perceived as a brightness pattern. Consequently, emitted by the diffractive optical element 4102, an image corresponding to the pixels of the polarization modulation element 4104 is perceived by the observer 4106. Furthermore, controlling the electric field applied to the pixels, it is possible to set the polarization direction of the light passing through the liquid crystal to an intermediate state between P-polarized an S-polarized light, that is, to elliptic polarizations. In that case, the light entering the diffractive optical element 4102 is divided into a linearly advancing component and a diffracted component, in accordance with the voltage applied to the pixels, so that the display of intermediate gradations is also possible.

This embodiment has been explained taking a polarization modulation element 4104 of the twisted nematic type as an example, but it is possible to use any type with which the polarization of incident light can be modulated. It is similarly possible to use a super-twisted nematic (STN) liquid crystal with a twist angle of more than 90°. Furthermore, the same effect can be attained when using a VA (vertical alignment) mode liquid crystal, in which the liquid crystal molecules are in uniform homogenous orientation with respect to their thickness direction, and turn into homeotropic orientation when an electric field is applied (or change from homeotropic orientation into homogeneous orientation).

Furthermore, instead of providing the reflection plate 4105, it is also possible to use a reflective material for the pixel electrode on the polarization modulation element 4104.

It is also possible to use a ferroelectric liquid crystal or an anti-ferroelectric liquid crystal in which the director of the liquid crystal molecules depends on the polarity of the electric field.

The liquid crystal elements used in the polarization modification element 4104 can be the same as in a liquid crystal panel used ordinarily for liquid crystal displays. Consequently, an image display system can be devised by substituting the front and back polarizers used for the liquid crystal elements with the diffractive optical element 4102, and application is possible without modification of the remaining illumination system, driving system etc., resulting in excellent versatility.

To be specific, a liquid crystal panel of about three inches with VGA resolution (640 × 480) was used for the polarization modification element 4104. When inputting an image signal into it and observing it at indoor lighting from a position near the observer 4106, it was possible to correctly perceive an input image without color leakage. The contrast was about 10 : 1. Moreover, when a polarizer with low polarization degree was arranged as the phase-retardation film 4103, the contrast could be improved to about 30: 1. In that case, the brilliance decreased for about 10% to 20%.

When the location of the observer was moved to the top in Fig. 25, to where the P-polarized light passing through the diffractive optical element 4102 in Fig. 25 was diffracted and emitted, the same image but with inverted dark and bright portions was perceived, and color shifts could be observed from this location.

Thus, it was confirmed that an image display system without color shifts and with good visibility can be obtained by combining a polarization modulation element 4104 with a diffractive optical element 4102 of the refractive index distribution type made of an optical medium with refractive index anisotropy, and using the light transmitted from the diffractive optical element 4102 for the image display.

Furthermore, since no internal back light is necessary, this image display system promises to have a to lower power consumption and smaller size.

Embodiment D2

The following explains another example of an image display system using a diffractive optical element as described in Embodiment B1 etc.

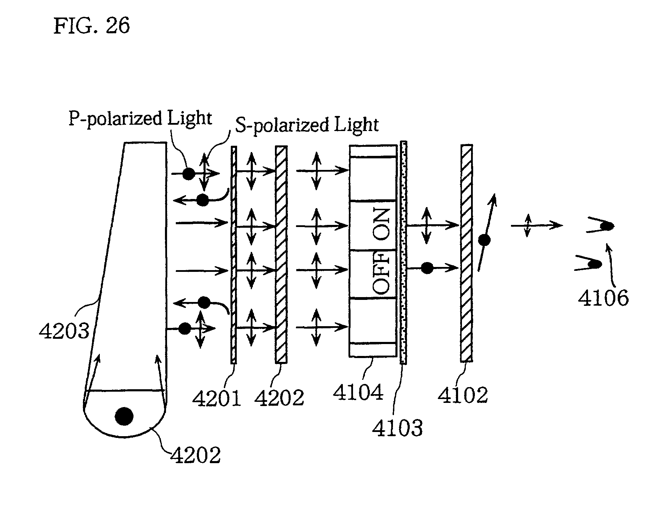

This image display system includes a light source 4202 as shown in Fig. 26. For the light source 4202, a fluorescent lamp, a xenon lamp, a metal halide lamp, a mercury lamp, an LED, an FED, laser light or an inorganic or organic electroluminescent element can be used, for example.

In this embodiment, a fluorescent lamp was used for the light source 4202, and a sidelight was configured, in which light was guided from below a diffractive optical element 4102 through a transparent acrylic light-guiding plate 4203 and emitted.

A polarization conversion film 4201 was disposed between the diffractive optical element 4102 and the light-guiding plate. The polarization conversion film 4201 has the property that it lets only certain polarization components pass and reflects the other polarization components, such as the NIPOCS (by Nitto Denko Corp.) for example. In Fig. 26, a polarization conversion film 4201 is used that has the property that it lets S-polarized light pass and reflects P-polarized light. In this case, the reflected S-polarized light returns to the light-guiding plate 4203, where it is reflected again. At this time, the polarization changes slightly from linear polarization to elliptical polarization. Consequently, when this light wave enters the polarization conversion film 4201, the S-polarized component of the elliptically polarized light is transmitted.

Thus, multiple reflections are repeated between the polarization conversion film 4201 and the light-guiding plate 4203, so that the polarized light is aligned in one direction and passes through the polarization conversion film 4201. Consequently, the polarization of the light waves from the light source 4202 is converted, so that the polarization modulation element 4104 can be used and the light efficiency can be improved.

For the polarization modulation element 4104, the same liquid crystal panel as in Embodiment D1 was used. Also in the other configurations, substantially the same liquid crystal panel as in Embodiment D1 was used. The light wave that has been turned into substantially S-polarized light with the polarization conversion film 4201 then enters the diffractive optical element 4102. Here, the S-polarized light passes through again and enters the pixels of the polarization modulation element 4104.

The polarization of the light passing through the polarization modulation element 4104 is modulated in accordance with the signal applied to the pixels. The polarization orientation is optimized with the phase-retardation film 4103, and the light enters the other diffractive optical element 4102.

Here, the P-polarized light is diffracted upwards in the paper plane and emitted in a direction outside the visual field of the observer 4106. The S-polarized light simply passes through the diffractive optical element 4102, and is perceived by the observer 4106.

When the direction of the diffractive optical element 4102 was observed from the position of the observer 4106, an image in accordance with the applied input signal could be seen correctly and without color leakage. Moreover, it was also possible to observe the outside scenery through the diffractive optical element 4102 from a position near the observer 4106.

Thus, with such an image display system configuration, it is possible to view either an image display and the outside scenery at the same time or only the outside scenery, and to switch between the two, so it could be confirmed that this configuration can be used as a see-through-type display.

Embodiment D3

The following explains another example of an image display system using a diffractive optical element as described in Embodiment B1 etc.

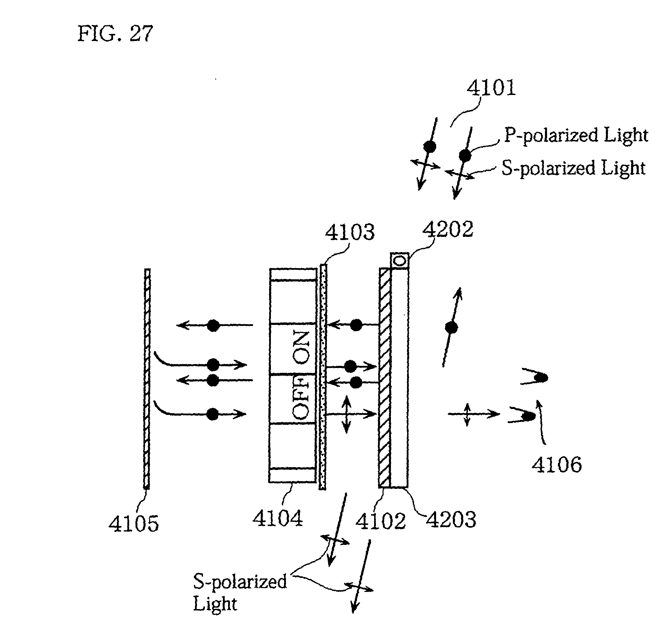

Fig. 27 shows an image display system using a diffractive optical element 4102 made in the same manner as described in Embodiment B1 etc., which can utilize both external light and an internal light source. The same liquid crystal panel as in Embodiment D1 is used for the polarization conversion element 4104. Also for the reflection plate 4105 and the phase-retardation film 4103, substantially the same elements were used as in Embodiment D1. For the light source 4202, a small light source arrangement with a light guide (not shown in the Fig. 27) attached to an LED was used.

The image display operation with external light 4101 is the same as in Embodiment D1.

The following is an explanation of the image display operation using the light source 4202. The light-guiding plate 4203 is made of a prism sheet of about 1mm thickness whose surface has a saw-tooth-shaped cross section. The light emitted by the white LED of the light source 4202 passes through the light guide and enters the light-guiding plate 4203. Then, the light waves reflected by the saw-tooth-shaped jaggedness at the surface of the light-guiding plate 4203 enter the diffractive optical element 4102. Light leaking from the light-guiding plate 4203 does not enter the direction of the observer 4106, because the shape of the light-guiding plate 4203 has been machined such that leaking light is emitted substantially in parallel to the light-guiding plate 4203. Of the light reflected by the light-guiding plate 4203 only the P-polarized light coming from a direction determined by the periodic structure inside the diffractive optical element 4102 is diffracted selectively, bent into a direction perpendicular to the surface of the diffractive optical element 4102, and emitted toward the polarization modulation element 4104. The rest of the operation is the same as explained for Embodiment D1. That is to say, a modulation is carried out with each pixel of the polarization modulation element 4104, and only the S-polarized light that has passed through the phase-retardation film 4103 and that is transmitted by the diffractive optical element 4102 is emitted, so that the observer 4106 can view an image.

When such an image display system was actually observed by an observer 4106, then a bright image could be viewed using the light source 4202 in a dark room, and under bright illumination the image could be viewed without turning on the light source 4202. Thus, it was confirmed that using an image display system configured in this manner, it is possible to select the light source depending on the environment, for example in accordance with a dark environment or a bright illumination. Consequently, it is possible to improve the visibility of the image under a variety of environments while achieving a reduction of the power consumption.

A further possible usage method is to detect the brightness of the illumination of the environment where the image display system is located, and automatically select the light source or adjust the intensity of the light source, making it possible to improve the display performance even further, and thus promising a wide range of applications.

Embodiment D4

The following explains another example of an image display system using a diffractive optical element as described in Embodiment B1 etc.

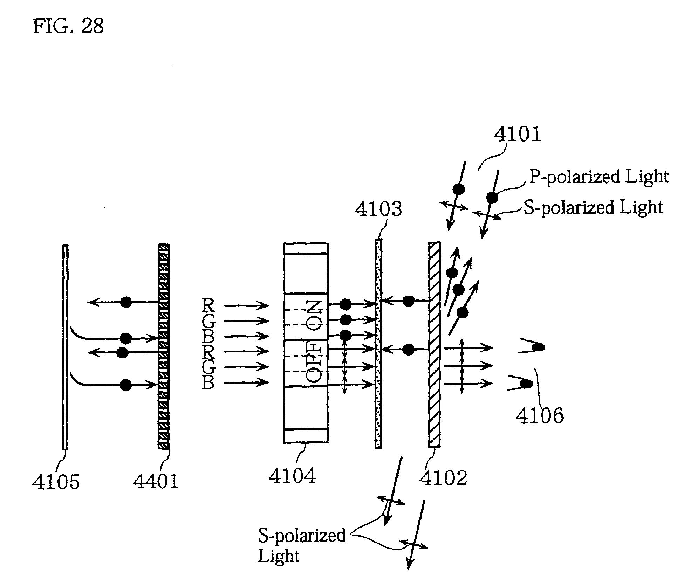

Fig. 28 shows an image display system, in which a diffractive optical element 4102 made as in Embodiment B1 etc. is combined with a color filter 4401. The polarization separation and diffraction of external light 4101 with the diffractive optical element 4102 is the same as in Embodiment D1. A liquid crystal having pixels for red, green and blue was used as the polarization modulation element 4104.

The color filter 4401 selectively transmits red, green and blue light, and absorbs the light that is not transmitted. The color filter 4401 is provided with pixels formed in correspondence to the pixels of the subsequent liquid crystal element. The light of red, green and blue wavelengths that has passed the color filter 4401 enters the pixels of the polarization modulation element 4104. Then, depending on whether the pixels are ON or OFF, the polarization is modulated.

As a result, P-polarized light that has passed an ON pixel is diffracted by the diffractive optical element 4102 upward in the paper plane, leaves the visual field of the observer 4106, and its light intensity results in a dark pattern that cannot be viewed. The diffraction angles are slightly different for red, green and blue, but since the diffraction angles are set such that blue light, which has the smallest diffraction angle, is outside the visual field of the observer, as shown in Fig. 28, the wavelength does not affect the result.

On the other hand, the S-polarized light that has passed the OFF pixels simply passes through the diffractive optical element 4102 and reaches the observer 4106.

For simplicity, Fig. 28 shows that all pixels corresponding to red, green and blue are ON or OFF, but the pixels on which light of these wavelengths is incident can be controlled individually with the applied electric field, letting the light pass the diffractive optical element 4102. Thus, selected light of the light with the red, green and blue wavelengths reaches the observer 4106. Therefore, the display of color images combining these colors becomes possible.

The displayed image that is perceived by the observer 4106 is made up of the light components that have been transmitted by the diffractive optical element 4102. Consequently, it is not affected by chromatic dispersion of red, green and blue wavelengths with the diffractive optical element 4102. As a result, problems such as color shifts in the image do not occur when performing color display using the color filter 4401.

When an RGB color image signal was fed to an image display system with this configuration, and the image was observed from a distance of about 30cm from the diffractive optical element 4102, a clear color image without color mixing or color leakage was attained.

Furthermore, the application of the color filter is not limited to the configuration of Fig. 28, and needless to say, it can also be applied to transmitting types as in Embodiment D2 or Embodiment D3, types combining transmission and reflection, and modifications thereof.

Embodiment D5

The following explains a diffractive optical element using a plastic film as a substrate and a method for manufacturing the same.

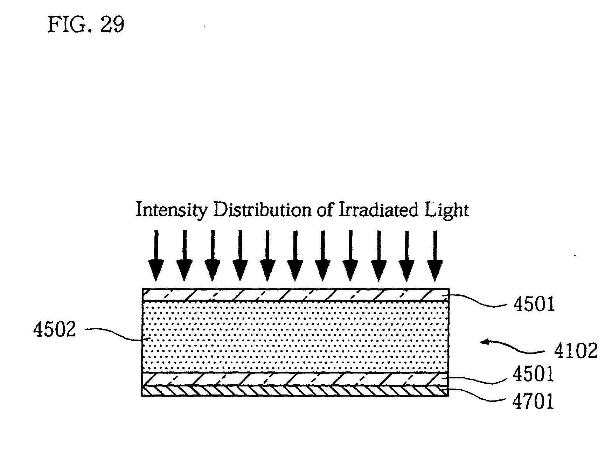

Fig. 29 shows a method for forming a diffractive optical element using a plastic film with a thickness of about several dozens to several hundred μm, for example ca. 100μm, as a transparent insulating substrate 4501.

As the plastic substrate, it is possible to use an AMOREX film (by Fujimori Kogyo Co., Ltd.), for example. Using such a plastic substrate makes it possible to lower the costs and to increase the versatility, because it is possible to attach it by retrofitting as a single film element to the surface of a liquid crystal panel, for example.

When using this plastic substrate, the plastic substrate, which is only about 100μm thick, may deform easily, so that it has to be arranged on top of a separate substrate with greater rigidity during the manufacturing steps. Fig. 29 shows an example, in which a plastic film serving as the transparent insulating substrate 4501 is placed on a colored glass substrate 4701. Although it is not shown in Fig. 29, a glass substrate with an anti-reflection film is arranged on the side on which the irradiation light is incident, in opposition to the colored glass substrate 4701, and exposure with irradiation light is performed sandwiching a pair of transparent insulating substrates 4501 and an optical medium 4502 including a liquid crystal and a polymer precursor between the colored glass substrate 4701 and the glass substrate with the anti-reflection film.

For the colored glass substrate 4701, an orange glass substrate was used that absorbs substantially all light with a wavelength of 514.5nm that is used for forming the diffraction grating. Furthermore, an anti-reflection film was formed on its surface. The plastic films used as the transparent insulating substrates 4501 and the colored glass substrate 4701 or the glass substrate arranged in opposition thereto can be adhered to one another by adsorption with water and optical matching fluid with substantially the same refractive index as the substrates.

The following is an explanation of the steps performed to form a grating in the configuration of Fig. 29 with high precision using laser light. Usually, laser light components passing through the sample are reflected, for example, by the outgoing surface of the glass substrate or a jig holding the sample, and reenter the sample. Due to interferences of this reflected light, a grating is formed in the sample with a pitch that is different from the design value, and the light reflected from the jig, for example, is scattered, leading to speckle noise. Consequently, diffraction and scattering effects occur as a result of this structure, and the diffraction function of the grating structure is lower than desired, so that the efficiency is decreased.

As a countermeasure, the colored glass substrate 4701 is used, which functions as a base substrate holding the plastic films parallel and making the thickness between the films uniform, and which also has the second purpose of absorbing laser light components that are transmitted through the sample. Thus, the sample is held at uniform thickness between the plastic films and since it is not affected by light reflected from the rear surface of the sample, it is possible to obtain an element with high efficiency.

Using a 100μm AMOREX film as the transparent insulating substrate 4501, and an orange substrate as the colored glass substrate 4701, a diffractive optical element 4102 was produced with laser interference. When the efficiency was evaluated with a He-Ne laser of 544nm wavelength as in Embodiment B1, it was found that this diffractive optical element 4102 has a diffraction efficiency of at least 90% for incident P-polarized light, and a transmittivity of at least 95% for incident S-polarized light.

In this manner, using the method for manufacturing a diffractive optical element of the present invention makes it possible to produce an element with excellent polarization separation properties and high efficiency using a very thin plastic film. With this method, it is further possible to devise the diffractive optical element 4102 as a film, which broadens the range of applications, promising extensive practical possibilities.

It should be noted that instead of placing the plastic substrate on a separate rigid substrate during the manufacturing process as described above, it is also possible attach a plastic film to the substrate of the unit used by the diffractive optical element to form the diffractive optical element. In that case, the operation of attaching the resulting diffractive optical element to this unit can be eliminated.

Embodiment D6

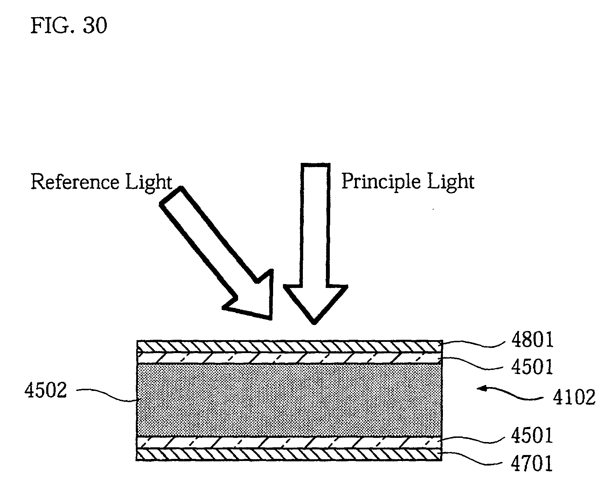

Fig. 30 illustrates a method for manufacturing a diffractive optical element 4102 using an anisotropically scattering film. The anisotropically scattering film 4801 has the property that it scatters light beams that are incident from a predetermined range of incidence angles and transmits light beams that are outside a predetermined range of incidence angles. Fig. 30 shows two light beams coming from different directions, namely a principle light beam and a reference light beam. The anisotropically scattering film 4801 has the property that it scatters light beams from the direction of the principle light beam and transmits the light beams from the direction of the reference light beam. A LUMISTY film (by Sumitomo Chemical Co., Ltd.) can be used as the anisotropically scattering film 4801 with these properties.

Taking an AMOREX film of 100μm thickness for the transparent insulating substrate 4501 as in Embodiment D5, a diffractive optical element 4102 was made using an orange substrate as the colored glass substrate 4701.

In this embodiment, the surface of the anisotropically scattering film 4801 was treated in an anti-reflection process, and then adhered to the transparent insulating substrate 4501 with an optical matching fluid. During the laser exposure, the principle light is scattered, so that a periodic structure is formed inside with a shape as given by the components scattered at the grating corresponding to the angle between the reference light and the principle light.

The efficiency of the resulting diffractive optical element 4102 was evaluated with a 544nm He-Ne laser. When P-polarized light of the He-Ne laser was incident from a direction corresponding to the reference light, diffraction light appeared that included components scattered in the incidence direction of the principle light. When it was incident from the direction of the principle light, diffraction light was observed in the direction of the reference light, but in that case, no scattered components could be seen.

It is also possible to use divergent light or convergent light instead of parallel light for the reference light and the principle light. In this case, the diffracted light becomes divergent or convergent with respect to the light waves incident on the diffractive optical element.

Using such an anisotropically scattering film 4801, it is possible to make a diffractive optical element 4102 with scattering properties. Moreover, when taking divergent light or convergent light for the two light beams during the laser exposure, it is possible to change the widening angle of the light waves diffracted by the diffractive optical element. Using a diffractive optical element with this function, it is also easy to change the visual field of the image display system.

Embodiment D7

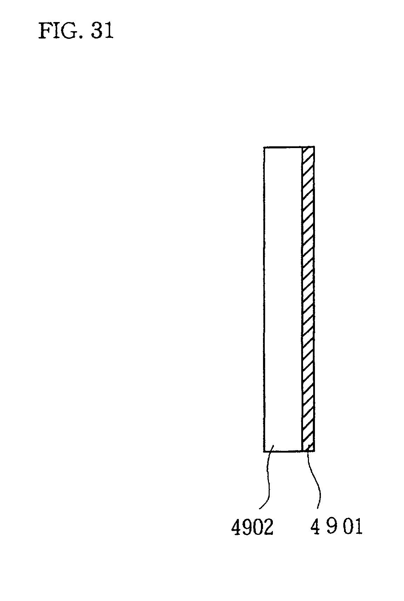

Fig. 31 illustrates how a diffractive optical film 4901 manufactured in accordance with Embodiment D5 or Embodiment D6 is retrofitted to a polarization modulation display 4902. The diffractive optical film 4901 can be made very thin at about 200 μm thickness. It can be easily arranged in place of the polarization plate of a liquid crystal panel as mentioned in Embodiment D1, and with this configuration, it can be used for a display combining polarization modulation and control of the display direction.

Furthermore, controlling the scattering properties and the widening angle for the diffracted light by using a manufacturing method as in Embodiment D5 or D6, it is possible to change the visual field in which the image can be seen. For example, using a diffractive optical film 4901 with scattering properties to configure an image display system as shown in Fig. 31, it is possible to increase the viewing angle with the scattering properties, and to use the image display system as a direct-view monitor in which images can be viewed from a wide range.

Embodiment D8

The following is an explanation of an example of forming a diffractive optical element by multiple exposure with light of the wavelengths for red (0.65 μm), green (0.55 μm) and blue (0.45 μm).

The following is a description of a process for manufacturing a diffractive optical element. First of all, a sample was made as in Embodiment B1. This was placed in an optical system made of an Ar laser as in Embodiment B1, and exposure was carried out on the bright portions of the interference fringes of green light (with 0.55μm wavelength). Then, the mirror angle was changed, and repeating this first step, exposure was carried out with red light (with 0.65 μm wavelength). Similarly, interference fringes of blue light (with 0.45 μ

m wavelength) were produced and used for exposure. Then, a diffractive optical element with overlapping interference fringes was produced by carrying out a second step of irradiating uniform light on the diffractive optical element, as in Embodiment B1.

The resulting diffractive optical element was used as the diffractive optical element 4102 in the image display system of Embodiment D4 (see Fig. 28). When a color video signal was input to the polarization modulation element 4104, and the image was observed from the position of the observer 4106, a clear image without problems such as color leakage or color mixing could be attained. Also when the position of the observer was shifted back and forth about 30cm, this did not degrade the image quality.

### Embodiment D9

The following is an explanation of an example in which diffractive optical elements are layered that have been formed by exposure with light of the wavelengths for red (0.65 μ m), green (0.55 μ m) and blue (0.45 μ m).

Exposure is carried out as in Embodiment B1 while changing the angle of the mirrors guiding the laser light to the exposure position, in accordance with the wavelengths for red (0.65μm), green (0.55μm) and blue (0.45μm) light, producing three diffractive optical elements. Layering them on one another to form one set of diffractive optical elements, and using it as the diffractive optical element 4102 in the image display system of Embodiment D4 (Fig. 28), a color video signal was fed to the polarization modulation element 4104. Viewing it from the position of the observer 4106, again, a bright image without such problems as color leakage or color mixing could be attained. Furthermore, the image quality was not negatively affected when shifting the place of the observer for 30cm back and forth.

### Embodiment D10

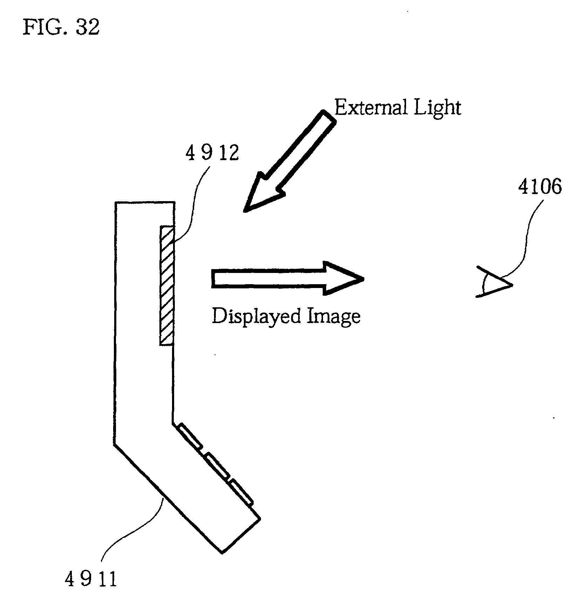

As shown in Fig. 32, a reflection-type image display system according to Embodiment D1 was used as the image display system 4912 of a portable information terminal device 4911 such as a mobile phone or a mobile tool. A portable information terminal device 4911 as shown in Fig. 32 is mostly in personal use of a single observer 4106. Therefore, it is preferable that the displayed image is efficiently displayed to the observer 4106 only.

Consequently, a diffractive optical element was used, that did not have scattering properties but focused light beams in a certain diffraction direction. With this configuration, the incidence angle of external light beams diffracted by the diffractive optical element and incident on the polarization modulation element is limited by the diffractive properties. As a result, the display range of light beams reflected by the reflection plate, transmitted through the diffractive optical element and emitted as the displayed image is limited to a range of viewing angles that are substantially perpendicular to the screen. Consequently, when the observer 4106 positions his eyes in this region, the light beams enter the observer's eyes efficiently, and the observer can view a bright display image.

An image display system according to Embodiment D1 was actually built into the display portion of a mobile phone. Then, signal input was performed, and the visibility under room lighting was confirmed. When the screen was observed from a perpendicular direction, the information could be displayed bright and clearly, without flicker due to screen reflections or diminishing contrast. Furthermore, operating the input portion of the device while holding it in the hand, the image was displayed efficiently in the direction of the eyes of the observer 4106, and it was found that visibility and operability were excellent.

Thus, applying an image display system of the present invention to a portable information terminal device, it was possible to attain the new effect of making the image easily viewable for an observer while enhancing the operability of the portable information terminal device.

### Embodiment D11

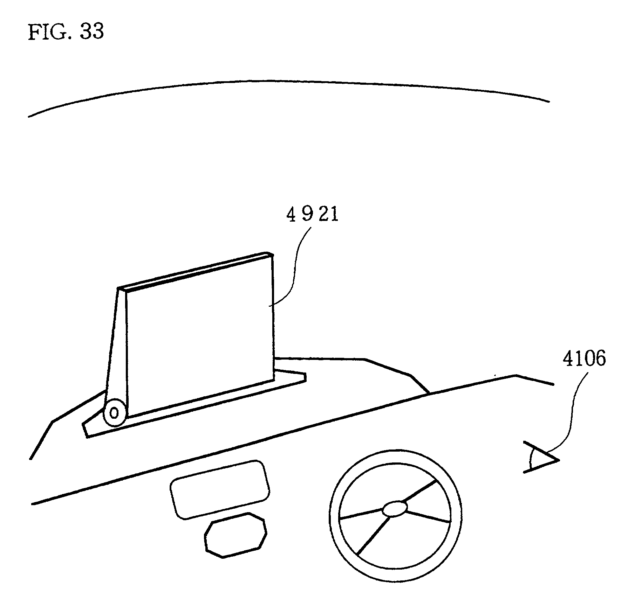

Fig. 33 shows a configuration example of an on-board head-up display configured using a transmission-type image display system made according to Embodiment D2. As mentioned in Embodiment D2, using the diffractive optical element 4102 of the present invention, it is possible to devise a see-through display 4921 with which it is possible to switch the display portion between system display and outside view.

Using this system as an on-board display system, it is possible to attain the following new functions. Because the display direction of the image can be controlled, it is possible to display the image information efficiently limited to the observer position when the observer 4106 sits in his seat, and to deviate light reflected from the surface from the display direction. Therefore, it is possible to provide a bright image.

Moreover, the entire display portion is made of elements with high transmittivity including the diffractive optical element, so that when the observer shifts his position from the display position of the diffractive optical element, the observer can easily view the outside scene through the screen. Therefore, the system's safety when used as an on-board system is excellent.

Using an image display system of the present invention as a see-through display in an on-board head-up display in this manner makes it possible to achieve the effect of attaining a new device that combines excellent display properties with high versatility can be attained.

Embodiment D12

The following is an explanation of a polarized illumination system that can be used as a backlight of a liquid crystal display device.

As shown in Fig. 34, this polarized illumination system includes a light source 5001, a diffractive optical element 5002 provided on the side where light is emitted from the light source 5001, a light-guiding plate 5003, a phase-retardation plate 5004 (λ/4-plate) provided below the light-guiding plate 5003, and a reflection plate 5005. As the diffractive optical element 5002, a diffractive optical element according to Embodiment B1 is used for example. Of the light beams incident from the light source 5001, S-waves are transmitted, whereas P-waves are diffracted obliquely downward. The S-waves are reflected by an oblique lateral portion of the light-guiding plate 5003 and emitted. The P-waves diffracted by the diffractive optical element 5002, on the other hand, pass through the phase-retardation plate 5004 and are reflected by the reflection plate 5005, and by passing through the light-retardation plate 5004 again, they are converted into P-waves and emitted. This means, an S-wave with aligned polarization is emitted from the upper surface of the light-guiding plate 5003. Thus, a bright image with high contrast can be attained by arranging a liquid crystal display element 5012 provided with, for example, polarizers 5011 and 5013 above the light-guiding plate 5003,

INDUSTRIAL APPLICABILITY

With the present invention, a diffractive optical element with high polarization selectivity and diffraction efficiency can be attained by exposing a liquid crystal and a polymer precursor at a predetermined temperature with two interfering beams of laser light. Furthermore, a high polarization conversion efficiency can be attained by optimizing the pattern in which the light-source light is diffracted by the diffractive optical element. Thus, it becomes possible to devise polarized illumination systems and image display systems that can display bright images with high contrast, so that the present invention is advantageous in various fields of devices used for image display.

**Claims**

1.  A polarized illumination system, comprising:

    a light source;
    an integrator made of a first lens array and a second lens array; and
    a plurality of diffractive optical elements including liquid crystal molecules aligned in a periodic structure;
    wherein the diffractive optical elements diffract light that is incident from the light source at angles that are symmetric with respect to the optical axis or to at least one plane including the optical axis.

2.  A polarized illumination system, comprising:

    a light source;
    an integrator made of a first lens array and a second lens array; and
    a first and a second diffractive optical element including liquid crystal molecules aligned in a periodic structure;
    wherein the diffractive optical elements are provided with a periodic structure such that an angle at which the diffractive optical elements diffract light that is incident from the light source is smaller at a peripheral portion than at a central portion near the optical axis.

3.  The polarized illumination system according to Claim 2, wherein a diffraction angle θ of the first diffractive optical element satisfies $\theta \geq \tan^{-1} a/d$, wherein "a" is the width of a light beam focused onto the diffractive optical elements by the integrator, and "d" is the spacing between the first and the second diffractive optical element in the propagation direction of the light.

4.  A polarized illumination system, comprising:

    a light source;
    an integrator made of a first lens array and a second lens array; and
    a diffractive optical element including liquid crystal molecules aligned in a periodic structure disposed between the first lens array and the second lens array;
    wherein the second lens array is made of a group of lenses, in which lenses whose aperture center matches with their curvature center are arranged in alternation with lenses whose aperture center is different from their curvature center.

5.  The polarized illumination system according to Claim 4, wherein light transmitted by the diffractive optical element enters the group of lenses whose aperture center matches with their curvature center and light diffracted by the diffractive optical element enters the group of lenses whose aperture center is different from their curvature center.

6.  A polarized illumination system, comprising:

    a light source;
    an integrator made of a first lens array and a second lens array;

a diffractive optical element including liquid crystal molecules aligned in a periodic structure; and

a phase plate made of a plurality of λ/2 plates; wherein a surface area of the λ/2 plates on the phase plates at a peripheral portion is smaller than at a center portion near the optical axis.

7. The polarized illumination system according to Claim 6, wherein when a plurality of light beams focused by the integrator enter the phase plate, a surface area of these light beams on the phase plate is substantially equal to a surface area of the λ/2 plates on the phase plates.

8. The polarized illumination system according to Claim 6, wherein the phase plate is formed by sealing a photocuring liquid crystal into a region that is sandwiched between transparent insulating substrates on which thin films have been formed that are made of a polymer that has been subjected to an alignment process by rubbing, and irradiating light through a mask.

9. The polarized illumination system according to any of Claims 1, 2, 4 and 6, wherein the diffractive optical element has the function to diffract those components of incident light that are polarized in one direction, and to substantially transmit those components of the incident light that are polarized in a direction substantially perpendicular thereto.

10. The polarized illumination system according to any of Claims 1, 2, 4 and 6, wherein the diffractive optical element has a structure, in which the direction of the optical axis of the liquid crystal molecules changes periodically.

11. The polarized illumination system according to any of Claims 1, 2, 4 and 6, wherein the diffractive optical element comprises a photopolymerization initiator and a pigment.

12. The polarized illumination system according to any of Claims 1, 2, 4 and 6, wherein the diffractive optical element comprises aligned liquid crystal molecules, wherein a photopolymerizing monomer or photocrosslinking liquid crystal polymer or oligomer is added, and the orientation of the director of the liquid crystal is fixed by irradiation of light of the UV spectrum.

13. A polarized illumination system, comprising:

a light source;
a diffractive optical element including liquid crystal molecules aligned in a periodic structure;

a reflection-type light valve;
an optical projection system for magnifying and projecting optical images on the light valve;
wherein the diffractive optical element reflects those components of light incident from the light source that are polarized in a first direction, wherein light components that are polarized substantially perpendicular to these polarized components of incident light are incident on the light valve, and light components polarized in the first direction reflected by the light valve are guided toward the optical projection system.

14. A polarized illumination system, comprising:

a light source;
a diffractive optical element including liquid crystal molecules aligned in a periodic structure;
a reflection-type light valve;
an optical projection system for magnifying and projecting optical images on the light valve;
wherein the diffractive optical element reflects those components of light incident from the light source that are polarized in a first direction, wherein light components that are polarized substantially perpendicular to these polarized components of incident light are incident on the light valve, and light components polarized in the first direction reflected by the light valve are guided toward the optical projection system;
wherein light beams from the light source are substantially separated by color into three light beams of the colors red, green and blue; and wherein a plurality of diffractive optical elements having a periodic structure with different pitches associated with the three light beam have been combined.

15. The polarized illumination system according to Claim 13 or 14, wherein the diffractive optical element has the function to diffract those components of incident light that are polarized in a first direction, and to substantially transmit those components that are substantially perpendicular to those polarized components of the incident light.

16. The polarized illumination system according to Claim 13 or 14, wherein the diffractive optical element has a structure, in which the optical axis direction of the liquid crystal molecules changes periodically.

17. A method for manufacturing a diffractive optical element, comprising:

a first step of providing a liquid crystal and at least one of a homomer, an oligomer, and a polymer in a region sandwiched by transparent insulating substrates; irradiating light with a periodical intensity distribution on the transparent insulating substrates by interference of two laser beams; partially curing said at least one of a homomer, an oligomer, and a polymer; and a second step of aligning the liquid crystal molecules with respect to the partially cured region.

18. The method for manufacturing a diffractive optical element according to Claim 17, wherein the diffractive optical element comprises a photopolymerization initiator and a pigment.

19. A method for manufacturing a diffractive optical element, comprising:

a first step of forming an alignment-processed thin film made of a polymer on a transparent insulating substrate; aligning and then curing photo- or heat-curing liquid crystal molecules on the thin film; and
a second step of forming a polymer thin film on the liquid crystal molecules and then forming photo- or heat-curing liquid crystal molecules such that they are aligned substantially perpendicular to the direction of the previously mentioned liquid crystal molecules;
wherein the first step and the second step are carried out a plurality of times.

20. A method for manufacturing a diffractive optical element, comprising:

a plurality of steps of forming an alignment-processed thin film made of a polymer on a transparent insulating substrate; aligning and then curing photo- or heat-curing liquid crystal molecules on the thin film;
wherein liquid crystal molecule layers with substantially the same ordinary refractive index of the liquid crystal molecules and different extraordinary refractive index are layered in alternation.

21. The method for manufacturing a polarized illumination system according to Claim 19 or 20, wherein the diffractive optical element comprises aligned liquid crystal molecules, wherein a photopolymerizing monomer or photocrosslinking liquid crystal polymer or oligomer is added, and wherein the orientation of the director of the liquid crystal is fixed by irradiation of light of the UV spectrum.

22. The method for manufacturing a polarized illumination system according to Claim 19 or 20, wherein the step of curing the liquid crystal molecules is performed in an inert gas atmosphere.

23. A method for manufacturing a diffractive optical element, comprising:

a first step of providing a liquid crystal and at least one of a homomer, an oligomer, and a polymer in a region sandwiched by transparent insulating substrates; irradiating light with a periodical intensity distribution on the transparent insulating substrates by interference of two laser beams; and partially curing said at least one of a homomer, an oligomer, and a polymer; and
a second step of aligning the liquid crystal molecules with respect to the partially cured region;
wherein a temperature of the transparent insulating substrates during the irradiation is maintained within a temperature range of substantially half the temperature at transition of the liquid crystal from nematic to isotropic (referred to in short as "N-I transition temperature" below) to a temperature approximately 10°C below the N-I transition temperature.

24. A method for manufacturing a diffractive optical element, comprising:

a first step of providing a liquid crystal and at least one of a homomer, an oligomer, and a polymer in a region sandwiched by transparent insulating substrates on which thin films have been formed that are made of a polymer that has been subjected to an alignment process by rubbing; and irradiating light with a periodical intensity distribution on the transparent insulating substrates by interference of two laser beams to partially cure said at least one of a homomer, an oligomer, and a polymer; and
a second step of aligning the liquid crystal molecules with respect to the partially cured region;
wherein the alignment direction of the liquid crystal molecules substantially coincides with the rubbing direction of the polymer thin films.

25. A method for manufacturing a diffractive optical element, comprising:

a step of providing a liquid crystal and at least one of a homomer, an oligomer, and a polymer in a region sandwiched by transparent insulating substrates; and irradiating light with an intensity that has a periodic structure with a pitch of about 1μm to 10μm onto a predetermined region on the transparent insulating substrates; and
a step of irradiating light on a region enclosing said predetermined region.

26. A method for manufacturing a diffractive optical element, comprising:

a first step of providing a liquid crystal and at least one of a homomer, an oligomer, and a polymer in a region sandwiched by transparent insulating substrates; irradiating light with a periodical intensity distribution on the transparent insulating substrates by interference of two laser beams; and partially curing said at least one of a homomer, an oligomer, and a polymer;

a second step of aligning the liquid crystal molecules with respect to the partially cured region; and

a step of periodically forming phase plates on the transparent insulating substrate on the side that is opposite to the light irradiation side.

27. The method for manufacturing a diffractive optical element according to Claim 26, wherein a pitch of the phase plates is not larger than about several dozen mm.

28. The method for manufacturing a diffractive optical element according to any of Claims 23 to 26, wherein the diffractive optical element has the function to diffract those components of incident light that are polarized in a first direction, and to substantially transmit those components that are substantially perpendicular to those components of the incident light that are polarized in the first direction.

29. The method for manufacturing a diffractive optical element according to any of Claims 23 to 26, wherein the diffractive optical element has a periodic structure that is oblique to the optical axis of the liquid crystal molecules.

30. The method for manufacturing a diffractive optical element according to any of Claims 23 to 26, wherein the diffractive optical element comprises a photopolymerization initiator and a pigment.

31. The method for manufacturing a diffractive optical element according to any of Claims 23 to 26, wherein the diffractive optical element comprises aligned liquid crystal molecules, wherein a photopolymerizing monomer or photocrosslinking liquid crystal polymer or oligomer is added, and wherein the orientation of the director of the liquid crystal is fixed by irradiation of light of the UV spectrum.

32. A method for manufacturing a diffractive optical element, combining at least two steps of any of Claims 23 to 26.

33. An image display system comprising:

a polarization modulation element; and
a diffractive optical element including liquid crystal molecules aligned in a periodic structure.

34. The image display system according to Claim 33, further comprising a reflection plate.

35. The image display system according to Claim 33, wherein the polarization modulation element comprises a reflecting electrode.

36. The image display system according to Claim 33, further comprising a phase-retardation film.

37. The image display system according to Claim 33, wherein the phase-retardation film comprises a $\lambda/4$ plate, a polarizer, a scatter plate, or a polarization conversion film.

38. The image display system according to Claim 33, further comprising 5 a color filter disposed on one side of the polarization modulation element.

39. A method for manufacturing a diffractive optical element, comprising:

a first step of providing a liquid crystal and at least one of a homomer, an oligomer, and a polymer in a region sandwiched by transparent insulating substrates; irradiating light with a periodical intensity distribution on the transparent insulating substrates by interference of two laser beams; and partially curing said at least one of a homomer, an oligomer, and a polymer; and

a second step of aligning the liquid crystal molecules with respect to the partially cured region;

wherein the insulating substrates on the light irradiation side and the opposite side are arranged on a substrate that substantially absorbs the laser light.

40. A method for manufacturing a diffractive optical element, comprising:

a first step of providing a liquid crystal and at least one of a homomer, an oligomer, and a polymer in a region sandwiched by transparent insulating substrates; irradiating light with a periodical intensity distribution on the transparent insulating substrates by interference of two laser beams; and partially curing said at least one of a homomer, an oligomer, and a polymer; and

a second step of aligning the liquid crystal molecules with respect to the partially cured region;

wherein a film having anisotropic scattering properties, scattering light beams incident at angles from a predetermined range of incidence angles and substantially transmitting light beams that are incident at angles outside a predetermined range of incidence angles, is arranged on the transparent insulating substrate on the irradiation side, and the transparent insulating substrate on the opposite side is arranged on a substrate that substantially absorbs the laser light.

41. The method for manufacturing a diffractive optical element according to Claim 39 or 40, wherein the transparent insulating substrates are approximately several dozen to several hundred μm thick.

42. The method for manufacturing a diffractive optical element according to Claim 39 or 40, wherein the laser light that is irradiated on the diffractive optical element includes converging light or diverging light.

43. The method for manufacturing a diffractive optical element according to Claim 39 or 40, wherein the diffractive optical element has the function to diffract those components of incident light that are polarized in a first direction, and to substantially transmit those components that are substantially perpendicular to those components of the incident light that are polarized in the first direction.

44. The method for manufacturing a diffractive optical element according to Claim 43, wherein the diffractive optical element has a periodic structure that is oblique to the optical axis of the liquid crystal molecules.

45. The method for manufacturing a diffractive optical element according to Claim 30 or 40, wherein the diffractive optical element comprises aligned liquid crystal molecules, wherein a photopolymerizing monomer or photocrosslinking liquid crystal polymer or oligomer is added, and wherein the orientation of the director of the liquid crystal is fixed by irradiation of light of the UV spectrum.

46. The method for manufacturing a diffractive optical element according to Claim 39 or 40, wherein the diffractive optical element comprises a photopolymerization initiator and a pigment.

47. The method for manufacturing a diffractive optical element according to Claim 39 or 40, wherein the diffractive optical element includes a structure, in which a plurality of different periodic structures are formed in superposition.

48. The method for manufacturing a diffractive optical element according to Claim 39 or 40, wherein the diffractive optical element includes a layered structure of a plurality of diffractive optical elements with different periodic structures.

49. A portable information terminal device including an image display system according to Claim 33.

50. A head-up display including an image display system according to Claim 33.

51. The image display system according to Claim 33, using a diffractive optical element made with the manufacturing method of Claim 39 or 40.

52. A polarized illumination system, comprising:

a light source;
a diffractive optical element including liquid crystal molecules aligned in a periodic structure;
a phase plate; and
a light-conducting plate.

53. The polarized illumination system according to Claim 52, wherein the diffractive optical element has the function to diffract those components of incident light that are polarized in a first direction, and to substantially transmit those components that are substantially perpendicular to those components of the incident light that are polarized in the first direction.

54. The polarized illumination system according to Claim 52, wherein the diffractive optical element has a periodic structure that is oblique to the optical axis of the liquid crystal molecules.

55. The polarized illumination system according to Claim 52, wherein the diffractive optical element comprises aligned liquid crystal molecules, wherein a photopolymerizing monomer or photocrosslinking liquid crystal polymer or oligomer is added, and wherein the orientation of the director of the liquid crystal is fixed by irradiation of light of the UV spectrum.

56. The polarized illumination system according to Claim 52, wherein the diffractive optical element comprises a photopolymerization initiator and a pigment.

57. The polarized illumination system according to Claim 52, wherein the diffractive optical element includes a structure, in which a plurality of different periodic structures are formed in superposition.

58. The polarized illumination system according to Claim 52, wherein the diffractive optical element includes a layered structure of a plurality of diffractive optical elements with different periodic structures.

59. A method for manufacturing a diffractive optical element, comprising:

providing a liquid crystal and at least one of a homomer, an oligomer, and a polymer in a region sandwiched by transparent insulating substrates;

first, irradiating light with a periodical intensity distribution through a mask that is partitioned into a plurality of regions on the transparent insulating substrates by interference of two laser beams; and

then, irradiating uniform light through a mask having a pattern corresponding to an inversion of the previously mentioned mask.

60. The method for manufacturing a diffractive optical element according to Claim 59, wherein the diffractive optical element has the function to diffract those components of incident light that are polarized in a first direction, and to substantially transmit those components that are substantially perpendicular to those components of the incident light that are polarized in the first direction.

61. The method for manufacturing a diffractive optical element according to Claim 59, wherein the diffractive optical element has a periodic structure that is oblique to the optical axis of the liquid crystal molecules.

62. The method for manufacturing a diffractive optical element according to Claim 59, wherein the diffractive optical element comprises a photopolymerization initiator and a pigment.

63. The method for manufacturing a diffractive optical element according to Claim 59, wherein the diffractive optical element comprises aligned liquid crystal molecules, wherein a photopolymerizing monomer or photocrosslinking liquid crystal polymer or oligomer is added, and wherein the orientation of the director of the liquid crystal is fixed by irradiation of light of the UV spectrum.

64. A diffractive optical element, made by

a first step of providing a liquid crystal and at least one of a homomer, an oligomer, and a polymer in a region sandwiched by transparent insulating substrates; irradiating light with a periodical intensity distribution on the transparent insulating substrates by interference of two laser beams; and partially curing said at least one of a homomer, an oligomer, and a polymer; and a second step of aligning the liquid crystal molecules with respect to the partially cured region.

65. The diffractive optical element according to Claim 64, wherein the alignment direction of the liquid crystal molecules in the second step is substantially perpendicular to a wall of a portion that has been partially cured in the first step.

66. The diffractive optical element according to Claim 64, wherein the diffractive optical element has been formed while heating it to a predetermined temperature during the irradiation of the laser light onto the transparent insulating substrates.

67. The diffractive optical element according to Claim 66, wherein the predetermined temperature is within a temperature range of substantially half the temperature at the transition of the liquid crystal from nematic to isotropic (referred to in short as "N-I transition temperature" below) to a temperature approximately 10°C below the N-I transition temperature.

68. A polarized illumination system according to Claim 1, wherein the diffractive optical element is partitioned into four regions by two orthogonal lines through the optical axis, wherein those regions arranged in opposition to one another diffract light that is incident from the light source at angles that are symmetric with respect to a plane including the optical axis.

FIG. 1

EP 1 146 379 A1

Optical Axis

1106   1105
1103
1102
1101a
P+S
1101
S
S
S
S
1110   1109
1108
1107   P
1104

FIG. 2

FIG. 3

FIG. 4

(a)

PS    SP    1136

↑PS   S↑P   θ2

d

θ1

1135

Focused Light Beam
From Integrator

a    b

P+S

(b)

1135a
(1136a)

1135b
(1136b)

1135d
(1136d)

1135c
(1136c)

1135
(1136)

(c)

1136

a    b

S  P

FIG. 5

(a)

(b)

(c)

(d)

FIG. 6

(a)

1151
1142

(b)

1142
1151
1152
1151
1142

1155

(c)

1142
1151
1152
1151
1142

1153

1156

UV

1154a
1154
(d)
1153

1142
1151
1152
1151
1142

(e)

1143
1141

1151
1142

FIG. 7

Laser Light (515nm)

1144

1145

1142

1143

FIG. 8

FIG. 9

EP 1 146 379 A1

FIG. 10

(a) Grating Formation

Intensity Distribution of Irradiated Light

Laser Light (515nm)

(1201)

1202

1203

1202

(b) Liquid Crystal Alignment (65℃)

Intensity Distribution of Irradiated Light

Laser Light (515nm)

1201

1202

1204

1203

1202

(c) Liquid Crystal Alignment (23℃)

Intensity Distribution of Irradiated Light

Laser Light (515nm)

1201

1202

1204

1203

1202

FIG. 11

Production of Sample at Room Temperature (23℃)

Change of P-wave Diffraction Light Intensity Over Time

Change of S-wave Diffraction Light Intensity Over Time

Production of Sample at Room Temperature (65℃)

Change of P-wave Diffraction Light Intensity Over Time

b': Polarization-dependent Region

Change of S-wave Diffraction Light Intensity Over Time

b': Polarization-dependent Region

EP 1 146 379 A1

FIG. 12

(a)
N-I Transition Point of Liquid Cystlal:80℃

◆ P1'
○ S1'

(b)
N-I Transition Point of Liquid Crystal:113℃

◆ P1'
○ S1'

FIG. 13

Temperature Characteristics of
Diffraction Efficiency

FIG. 14

(a) Angular Dependency of Liquid Crystal Hologram
   Diffraction Efficiency

◆ P-(B:488nm)
■ P-(G:544nm)
▲ P-(R:633nm)
✕ S-(B:488nm)
✳ S-(G:544nm)
● S-(R:633nm)

(b) Angular Dependency of Liquid Crystal Hologram
   Diffraction Efficiency (White Collimated Light)

◆ P1'
■ S1'

FIG. 15

Dependency of Contrast on Incidence Angle

FIG. 16

S

P

P

S

P

Vertically Aligned
Liquid Crystal Layer

Horizontally Aligned
Liquid Crytal Layer

2501

EP 1 146 379 A1

FIG. 17

(a)
2503
2502

(b)
Application of
Liquid Crystal
2503
2502
2510

(c)
UV Light
2504
2503
2502

(d)
2505
2504
2503
2502

(e)
2506
2505
2504
2503
2506
2505
2504
2503
2506
2505
2504
2503
2506
2505
2504
2503
2502

FIG. 18

2501

Second Horizontally
Aligned Liquid Crystal
Layer

First Horizontally Aligned
Liquid Crytal Layer

FIG. 19

Intensity Distribution
of Irradiated Light

3601

3101

3602          3603

FIG. 20

(a)                              (b)

3604                             3605

FIG. 21

FIG. 22

(a)

2305　2306　2303 2307

2301

2101
2101a

(b)

2309　2312
2308　2304 2313
2311　2310
2104
2302

(c)

2306　2309 2312
S　P　S
2303
2304
2301
2101　2101a
2104
2302

EP 1 146 379 A1

FIG. 23

FIG. 24

3503
3505
P-wave
3501
S-wave
S-wave
S-wave
S-wave
S-wave
S-wave
P-wave
3502
3506
3504
P+S-wave
1101

FIG. 25

4101

P-polarized Light

S-polarized Light

4103

OFF ON

4105

4104

4102

4106

S-polarized Light

FIG. 26

P-polarized Light    S-polarized Light

4203
4201    4202
4202
4104
4103
4102
4106

FIG. 27

4101

P-polarized Light

S-polarized Light

4103    4202

OFF    ON

4105    4104    4102    4203

4106

S-polarized
Light

FIG. 28

FIG. 29

Intensity Distribution of Irradiated Light

4502

4501

4102

4501

4701

FIG. 30

Reference Light

Principle Light

4801
4501
4502
4102
4501
4701

FIG. 31

4902    4 9 01

FIG. 32

External Light

4912

4106

Displayed Image

4911

FIG. 33

FIG. 34

FIG. 35

FIG. 36

9204

9203

9202

9201

9201

9205

9206

Incident Light

9106

Displayed Image

Light Reflected at Surface

## INTERNATIONAL SEARCH REPORT

| | International application No. |
|---|---|
| | PCT/JP99/06659 |

**A. CLASSIFICATION OF SUBJECT MATTER**
Int.Cl$^7$
  G02B27/28, G02B5/18, G02B5/30, G02F1/13, G02B1/1335

According to International Patent Classification (IPC) or to both national classification and IPC

**B. FIELDS SEARCHED**

Minimum documentation searched (classification system followed by classification symbols)
Int.Cl$^7$
  G02B27/28, G02B5/18, G02B5/30, G02F1/13, G02B1/1335

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2000 |
| Kokai Jitsuyo Shinan Koho | 1971-2000 | Jitsuyo Shinan Toroku Koho | 1996-2000 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 10-197827, A (Matsushita Electric Ind. Co., Ltd.), 31 July, 1998 (31.07.98), | 1,2,3,6,7,9, 33,38,52-54,68 |
| Y | Full text; Figs. 1 to 14   (Family: none) | 8,10-12,34-37, 51,55,56 |
| A | | 4,5,57,58 |
| X | EP, 777136, A (Victor Co Of Japan), | 13,15 |
| Y | 04 June, 1997 (04.06.97), | 16,34,35,49,50 |
| A | Full text; Figs. 1 to 26 & JP, 9-189809, A | 14 |
| X | JP, 10-221515, A (Matsushita Electric Ind. Co., Ltd.), | 25 |
| Y | 21 August, 1998 (21.08.98), Full text; Figs. 1 to 4   (Family: none) | 11,12,16,49-51 ,55,56 |
| A | | 17-24,26-32,39 -48,59-67 |
| Y | JP, 9-281481, A (Teijin Limited), 31 October, 1997 (31.10.97), Full text; Figs. 1, 2   (Family: none) | 8 |
| Y | US, 5576870, A (Matsushita Electric Industrial  Co.), | 10 |

☒ Further documents are listed in the continuation of Box C.      ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier document but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 07 March, 2000 (07.03.00) | 14 March, 2000 (14.03.00) |

| Name and mailing address of the ISA/ | Authorized officer |
|---|---|
| Japanese Patent Office | |
| Facsimile No. | Telephone No. |

Form PCT/ISA/210 (second sheet) (July 1992)

INTERNATIONAL SEARCH REPORT

| International application No. |
| --- |
| PCT/JP99/06659 |

C (Continuation).   DOCUMENTS CONSIDERED TO BE RELEVANT

| Category* | Citation of document, with indication, where appropriate, of the relevant passages | Relevant to claim No. |
| --- | --- | --- |
| | 19 November, 1996 (19.11.96), Full text; FIGS.1-13(b) & JP, 7-5469, A | |
| Y | JP, 10-186356, A (NIPPON OIL COMPANY, LTD.), 14 July, 1998 (14.07.98), Full text; Figs. 1 to 18    (Family: none) | 36,37 |
| Y | JP, 8-146407, A (Hitachi, Ltd.), 07 June, 1996 (07.06.96), Full text; Figs. 1 to 11    (Family: none) | 49 |
| Y | JP, 9-311307, A (Asahi Glass Co., Ltd.), 02 December, 1997 (02.12.97), Full text; Figs. 1 to 5    (Family: none) | 50 |
| A | JP, 10-206842, A (Nikon Corporation), 07 August, 1998 (07.08.98), Full text; Figs. 1 to 11    (Family: none) | 14 |

Form PCT/ISA/210 (continuation of second sheet) (July 1992)

## INTERNATIONAL SEARCH REPORT

| International application No. |
|---|
| PCT/JP99/06659 |

**Box I    Observations where certain claims were found unsearchable (Continuation of item 1 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box II    Observations where unity of invention is lacking (Continuation of item 2 of first sheet)**

This International Searching Authority found multiple inventions in this international application, as follows:

      The inventions of claims 1-16, 21, 22, 52-58, 68 relate to a "polarized
light illuminator and a method for producing the same".  The inventions of claims
17-20, 23-32, 39-48, 59-67 relate to a "method for producing a diffraction optical
device".  The inventions of claims 33-38, 49-51 relate to an "image display,
a terminal information device, and a head-up display".  These three groups of
inventions are not so linked as to form a single general inventive concept.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.

☐    No protest accompanied the payment of additional search fees.

Form PCT/ISA/210 (continuation of first sheet (1)) (July 1992)